(19) Europäisches Patentamt
European Patent Office
Office européen des brevets

(11) **EP 1 627 977 B1**

(12) **EUROPÄISCHE PATENTSCHRIFT**

(45) Veröffentlichungstag und Bekanntmachung des Hinweises auf die Patenterteilung:
**20.02.2008 Patentblatt 2008/08**

(51) Int Cl.:
*E04F 15/10* (2006.01)          *B32B 38/18* (2006.01)
*B32B 37/12* (2006.01)

(21) Anmeldenummer: **05107211.4**

(22) Anmeldetag: **04.08.2005**

(54) **Verfahren zur Herstellung von Laminatbodenplatten mit einem Ausgleichelement, insbesondere mit einem Gegenzugimprägnat, und Vorrichtung zur Herstellung eines Ausgleichelements**

Method for producing laminated floor panels comprising a balance element, in particular an impregnated structure for balancing stresses, and apparatus for producing a balance element

Procédé pour la fabrication de parquets laminés comprenant une balance, en particulier une structure imprégnée pour équilibrer les contraintes, et dispositif pour la fabrication de balances

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.08.2004 FR 0451819**
**23.11.2004 DE 102004056540**

(43) Veröffentlichungstag der Anmeldung:
**22.02.2006 Patentblatt 2006/08**

(73) Patentinhaber: **DAKOR Melamin Imprägnierungen GmbH**
**72535 Heroldstatt (DE)**

(72) Erfinder:
• **Miclo, Thierry**
**67300 Schiltigheim (FR)**

• **Campo, Claude**
**67000 Strasbourg (FR)**
• **Strub, Jean-Jacques**
**67000 Strasbourg (FR)**
• **Zierold, Ulrich**
**82031 Grünwald (DE)**
• **Zierold, Mark**
**89143 Blaubeuren (DE)**
• **Beck, Elmar**
**72535 Heroldstatt (DE)**

(74) Vertreter: **Patentanwälte**
**Dr. Solf & Zapf**
**Hauptstrasse 97**
**51465 Bergisch-Gladbach (DE)**

(56) Entgegenhaltungen:
DE-U1- 20 207 218          US-A- 4 505 771
US-A1- 2003 077 433

EP 1 627 977 B1

## Beschreibung

Die vorliegende Erfindung liegt im Bereich geschichteter Beläge, insbesondere für Fußböden. Sie betrifft ein Verfahren zur Herstellung einer Laminatbodenplatte, die mit einem Ausgleichelement versehen ist. Des Weiteren bezieht sich die vorliegende Erfindung auf eine Vorrichtung zur Herstellung eines derartigen Ausgleichelements, eine Laminatbodenplatte mit einem derartigen Ausgleichelement sowie auf ein Verfahren und eine Vorrichtung zur Herstellung von solchen Ausgleichelementen, insbesondere von Gegenzugimprägnaten und Laminatbodenplatten.

Es ist bekannt, Platten zur Herstellung von Laminatfußböden durch eine beidseitige Beschichtung von Holzwerkstoffplatten herzustellen. So gibt es zahlreiche geschichtete Fußbodenbeläge, die aus einer Vielzahl von Schichten oder Platten bestehen, welche man durch Verkleben oder mechanisches Fügen miteinander verbindet. In vielen Fällen enthalten die Platten einen Kern aus Holz oder einem Werkstoff auf Holzbasis, beispielsweise der Art HDF (High Density Fiberboard) oder MDF (Medium Density Fiberboard); das heißt, sie bestehen aus Holzfaser, die gepresst und der ein Bindemittel, wie ein Kunstharz, beigefügt wurde. Dieser Kern wird auf seiner Oberseite mit einer dekorativen Schicht, wie einem imprägnierten Dekorpapier, überzogen, so dass eine Fußboden-Laminatplatte eine dekorative Schicht aus einem bedruckten Papier umfassen kann, die auf dem Kern durch Imprägnierung mit einem polymerisierbaren Aminoplastharz, wie beispielsweise Melaminharz, aufgetragen ist. Bekanntermaßen wird in der Regel über der Dekorschicht auf gleiche Weise mit Hilfe eines Imprägniermittels auch ein Overlay, z. B. in Form eines Zellulosepapieres, aufgebracht.

Auf der Unterseite kann eine bekannte Laminatbodenplatte eine Schicht umfassen, die insbesondere innere mechanische Spannungen im Schichtverbund ausgleichen soll. Diese Schicht kann eine Ausgleichsfolie sein, besteht aber zumeist aus einer einfachen Kraft- oder Regeneratpapierlage, die imprägniert bzw. durch Imprägnierung appliziert ist und daher als Gegenzugimprägnat bezeichnet wird. Im Folgenden wird diese Schicht durch den Begriff Ausgleichelement umfaßt.

Diese verschiedenen Schichten, das Overlay, die dekorative Schicht, der Kern und das Ausgleichelement, werden heiß verpresst, um sie miteinander zu verbinden und so die genannte Laminatbodenplatte herzustellen.

Zum Einführen in die Presseinrichtung ist eine Hilfsvorrichtung erforderlich, wie z. B. eine Lagerstation, auf der die verschiedenen Schichten vorher übereinander gelegt werden, damit sie im richtigen Aufbau in die Presseinrichtung gegeben werden können. Dies stellt insofern ein Problem dar, als das Material der unteren Folien der Platte, insbesondere eines Gegenzugimprägnats oder einer anderen Ausgleichsfolie, nicht sehr starr ist. So biegen sich allein wegen ihres Gewichts die Ränder des Ausgleichelements, wenn sie von einem Hilfsmittel abgehoben werden und es ist dann nicht mehr möglich, mit Klemmen oder ähnlichem die Gesamtheit der übereinander gelegten Schichten zu ergreifen.

Um bei derartigen beschichteten Laminatbodenplatten den Gehschall zu mindern, ist es auch bekannt, zwischen der Fußbodenplatte und der Laminatbodenplatte schalldämmende Matten, beispielsweise aus Pappe, Kork, Filz, Kautschuk oder einer Kunststoffschaumfolie zu legen. Hierbei ist es des Weiteren ebenfalls bekannt, diese schalldämmenden Materialien vor Verlegung der Laminatbodenpaneele an dieser, beispielsweise durch Verkleben, zu befestigen, d. h. das schalldämmende Material wird in einem getrennten Arbeitsgang auf der Unterseite der Laminatbodenplatte aufkaschiert. So beschreibt die deutsche Gebrauchsmusterschrift DE 202 07 218 U1 einen Hartbodenbelag, insbesondere einen Laminatfußbodenbelag, mit integriertem Schallschutz, der eine Trägerplatte und eine an der Unterseite der Trägerplatte befestigte imprägnierte Beschichtung aufweist, wobei mindestens eine Schallschutzschicht mit dem Imprägnierharz der Beschichtung als Kleber mit der Beschichtung verklebt ist.

Im Rahmen der bekannten diskontinuierlichen Herstellungsverfahren umfaßt die Herstellung der beschriebenen Laminatbodenplatte im Allgemeinen somit mindestens zwei grundlegende Verfahrensschritte. Während des ersten Verfahrensschrittes wird die beschichtete Platte durch Übereinanderlegen und darauf folgendes Pressen der verschiedenen Schichten hergestellt. Der zweite Schritt besteht dann nach einem Umdrehen der Platte aus dem Auflegen und anschließenden Verkleben der isolierenden Unterschicht und einem weiteren Pressen, bei dem die schalldämmenden Materialien als Schicht an der unteren Oberfläche der genannten Platte befestigt werden. Die Schicht der schalldämmenden Materialien kann verallgemeinernd auch als isolierende Unterschicht bezeichnet werden, da sie neben der Funktion der Wärmedämmung bedarfsweise auch andere isolierende Aufgaben, wie die einer Wärme- oder Feuchtigkeitsdämmung, übernehmen kann. Die Ausdrücke "schalldämmende Materialschicht" und "isolierende Unterschicht" werden daher im Folgenden synonym verwendet.

Die WO 02/100638 A1 beschreibt einen Laminatfußboden mit zweilagiger Trittschalldämpfung. Hierbei ist vorgesehen, ein Paneel für einen Fußbodenbelag mit einer aus thermoplastischem Material bestehenden Schicht, die der Schalldämmung dient und die sich an der Unterseite des Paneels befindet, unterseitig mit einer weiteren Schicht zu überziehen, die nach einem Verlegen des Paneels als Kontaktfläche mit einem Unterboden, wie einem Estrich oder ähnlichem, dienen soll. Diese weitere zur Trittschalldämpfung vorgesehene Schicht bzw. Lage kann aus einem sehr dünnen, festen Papier bestehen, welches mit Acrylat imprägniert worden ist. Die zusätzlich vorhandene Schicht ist wegen ihrer Positionierung an unterster Stelle des Fußbodens, d. h. unter der ihrer Natur und Funktion nach verhältnismäßig weichen und/oder elastischen Dämmschicht, nicht in der Lage, wie ein Gegenzugimprägnat zu wirken, welches Zug- oder Druckspannungen im über der Dämmschicht liegenden Bereich des Paneels kompensiert.

Sowohl mit dem Bodenbelag gemäß der DE 202 07 218 U1 als auch mit dem Laminatfußboden der WO 02/100638 A1 ist der Nachteil verbunden, dass ein zusätzlicher Arbeitsgang nach der Herstellung der Laminatbodenplatte erforderlich ist, um das einschichtig oder zweischichtig ausgeführte Dämmmaterial aufzubringen.

Der vorliegenden Erfindung liegt die Aufgabe zu Grunde, die Herstellung von Laminatbodenplatten, in Verbindung mit einer rückseitigen Schalldämmung, weniger aufwändig zu gestalten, wobei die Notwendigkeit einer nachträglichen Beschichtung mit Schalldämmmaterial an den fertigen Laminatbodenpaneelen entfallen soll.

Diese Aufgabe wird erfindungsgemäß durch ein Verfahren gemäß Anspruch 1 und mittels einer Vorrichtung gemäß Anspruch 28 gelöst.

Erfindungsgemäß wird ein Ausgleichelement zur Verfügung gestellt, bei dem das imprägnierte Papier mit einer isolierenden Unterschicht verbunden ist. Bevorzugt wird erfindungsgemäß ein Gegenzugimprägnat zur Verfügung gestellt, bei dem auf das imprägnierte Gegenzugpapier einseitig eine schalldämmende Materialschicht mittels einer Klebebeschichtung aufgebracht ist.

Bekannte Laminatbodenplatten werden in Kurztakt- oder Doppelbandpressen unter der Verwendung von hoch abriebfestem Overlaypapier und bedruckten imprägnierten Dekorpapier sowie einer Trägerplatte und einem Gegenzugimprägnat als Ausgleichelement unter Verwendung von speziellen Pressblechen bzw. Bändern unter einem Pressdruck von beispielsweise 20 bis 40 bar und bei Presstemperaturen von insbesondere 160 bis 200 °C sowie Presszeiten von insbesondere 8 bis 30 s hergestellt. Erfindungsgemäß kann nunmehr eine derartige Laminatbodenplatte unmittelbar ohne einen zusätzlichen Arbeitsprozeß mit einer Dämmstofflage versehen werden, da das erfindungsgemäße Gegenzugimprägnat bereits eine derartige Dämmstoffschicht aufweist. D. h. das erfindungsgemäße, separate und einzeln zu handhabende, Verbundprodukt aus imprägnierten Gegenzugpapier und schalldämmender Materialschicht wird unmittelbar in den Herstellungsprozeß der Laminatbodenplatte eingebracht. Die derart hergestellte erfindungsgemäße Laminatbodenplatte besitzt überraschenderweise gegenüber nachträglich mit einer schalldämmenden Materialschicht versehenen Laminatbodenplatten der gattungsgemäßen Art durch den vollflächigen Verbund der Materialien miteinander eine verbesserte Trittschalldämmung.

Weitere Merkmale der Erfindung, insbesondere die Art des Verfahrens und der Aufbau der Vorrichtung zur Herstellung des erfindungsgemäßen Ausgleichelements bzw. Gegenzugimprägnates, sind in den auf den Anspruch 1 bezogenen weiteren Ansprüchen sowie der folgenden Beschreibung enthalten.

Anhand der in den beiliegenden Zeichnungen dargestellten Ausführungsbeispiele wird die Erfindung nunmehr näher erläutert. Es zeigen:

Fig. 1        einen Schnitt durch ein erfindungsgemäßes Gegenzugimprägnat,

Fig. 2        einen Schnitt durch eine erfindungsgemäße Laminatbodenplatte mit einem Gegenzugimprägnat gemäß Fig. 1,

Fig. 3        eine Ansicht einer erfindungsgemäßen Vorrichtung zur Herstellung eines Gegenzugimprägnates gemäß Fig. 1,

Fig. 4, 4a    Ansichten von weiteren erfindungsgemäßen Vorrichtungen zur Herstellung eines Gegenzugimprägnates gemäß Fig. 1,

Fig. 5        eine Ansicht einer weiteren erfindungsgemäßen Vorrichtung zur Herstellung eines Gegenzugimprägnates gemäß Fig. 1,

Fig. 6        einen Schnitt durch eine weitere Ausführung einer zur Veranschaulichung ihres Herstellungsverfahrens in Explosionsdarstellung gezeigten erfindungsgemäßen Laminatbodenplatte.

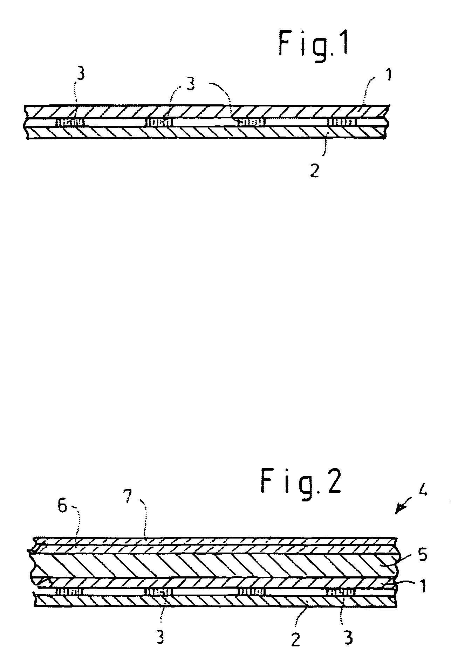

Wie sich aus Fig. 1 ergibt, besteht ein als erfindungsgemäßes Ausgleichelement ausgebildetes Gegenzugimprägnat aus einem imprägnierten Papier, einem sogenannten Gegenzugpapier 1, auf das einseitig eine schalldämmende Materialschicht 2 mittels einer Klebebeschichtung 3 aufgebracht ist. Das Gegenzugpapier 1 besteht vorteilhafterweise aus einem Regeneratpapier auf der Basis von Edelzellstoffen, wobei eine Rohpapiergrammatur von 70 bis 140 g/m$^2$ zweckmäßig ist. Das Endgewicht nach der Tränkung mit Harz, z. B. Melamin-Harz, beträgt vorzugsweise 170 bis 320 g/m$^2$. Die Menge des Harzeinsatzes und somit das daraus resultierende Endgewicht sowie das eingesetzte Rohpapier sind stark von der Art eines Overlays auf der Oberseite einer Laminatbodenplatte abhängig, für die das Gegenzugpapier 1 zur Verwendung kommt. Bei dem Harz handelt es sich bevorzugt um ein Aminoplastharz, bestehend aus Harnstoff und/oder Melaminharzen.

Die schalldämmende Materialschicht 2 besteht vorzugsweise aus einem geschäumten Kunststoffmaterial. Es ist jedoch auch die Verwendung von Filz, Kork oder einem Kautschukmaterial oder Gemischen hieraus möglich. Vorzugsweise wird ein Polyurethanschaum verwendet, der insbesondere aus einem Gemisch aus Polyurethan-Recyclingschaumstoff, Polyurethan-Verbundschaum und Bindemittel besteht. Die Dichte beträgt vorzugsweise 200 bis 400 kg/m³, insbesondere 300 kg/m³. Die Entzündungstemperatur liegt vorzugsweise über 400 °C und die Zersetzungstemperatur ist größer als 180 °C. Der erfindungsgemäß verwendete PUR-Schaumstoff besteht aus einer Folie, vorzugsweise einer 1 bis 3 mm dicken Polyurethan-Schaumstoff-Folie.

Als Kleber für die Herstellung der Klebebeschichtung 3 wird bevorzugt ein Schmelzkleber (hot-melt), ein Haftkleber oder ein Dispersionskleber auf Copolymerbasis verwendet. Letzterer besitzt vorzugsweise eine Viskosität (Brookfield RV 23 °C) von ca. 7000 mPas bei einem vorzugsweise vorhandenen Feststoffgehalt von ca. 69 % und einem pH-Wert von ca. 5,5. Der erfindungsgemäß verwendete Kleber gewährleistet einerseits eine gute Verbindung zwischen dem imprägnierten Gegenzugpapier 1 und der schalldämmenden Materialschicht 2 und hält den Pressbedingungen bei der Herstellung einer erfindungsgemäßen Laminatbodenplatte stand.

In Fig. 2 ist eine unter Verwendung des erfindungsgemäßen Gegenzugimprägnates gemäß Fig. 1 hergestellte erfindungsgemäße Laminatbodenplatte 4, insbesondere ein Fußbodenlaminat, dargestellt. Diese Laminatbodenplatte 4 besteht aus einer Trägerplatte 5, auf deren Oberseite eine Beschichtung - zweckmäßigerweise aus einem imprägnierten Dekorpapier 6 - angeordnet ist, das auf seiner Oberseite eine Beschichtung aus einem Overlay 7, insbesondere ein Overlaypapier 7, aufweist. Sowohl Dekorpapier 6 als auch Overlaypapier 7 sind harzgetränkte Materialien. Auf seiner Unterseite weist die Trägerplatte 5 ein erfindungsgemäßes Gegenzugimprägnat, wie in Fig. 1 beschrieben, auf. Dabei bildet die schalldämmende Materialschicht 2 die unterste Lage der erfindungsgemäßen Laminatbodenplatte 4, wobei diese Materialschicht 2 eine durch die herstellungsbedingte Verpressung beeinflusste Beschaffenheit besitzt.

Die Herstellung der erfindungsgemäßen Laminatbodenplatte 4 erfolgt insbesondere in einer Kurztakt- oder Doppelbandpresse, in der das Overlaypapier 7 mit dem bedruckten und imprägnierten Dekorpapier 6 sowie die Trägerplatte 5 und das erfindungsgemäße Gegenzugimprägnat unter Verwendung von speziellen Pressblechen oder -bändern unter einem Pressdruck von 20 bis 40 bar und bei einer Presstemperatur von 160 bis 200 °C mit einer Presszeit von 8 bis 30 s verpresst werden. Dabei erfolgt die Pressung derart, dass das erfindungsgemäße Gegenzugimprägnat mit seiner schalldämmenden Materialschicht 2 derart angeordnet ist, dass diese gegen das jeweilige Pressblech anliegt, so dass die schalldämmende Materialschicht 2 gleichzeitig als Presspolster dient. Demnach wird das erfindungsgemäße Gegenzugimprägnat mit dem imprägnierten Gegenzugpapier 1 an der Oberseite so in die Pressanlage eingelegt, dass darauf die Trägerplatte 5 abgelegt werden kann. Auf der Trägerplatte 5 werden vor dem Verpressen das imprägnierte Dekorpapier 6 und auf dieses das Overlaypapier 7 aufgelegt. Der Pressvorgang ist dabei derart eingestellt, dass die fertige Laminatbodenplatte 4 eine ausreichende Planlage bei der späteren Verlegung gewährleistet.

Die erfindungsgemäße Laminatbodenplatte zeichnet sich durch eine gegenüber bekannten Platten verbesserte Gehschalldämmung aus. Diese verbesserte Gehschalldämmung ergibt sich aus folgenden Messungen:

Es wurden an zwei Varianten eines Laminatfußbodenaufbaus die raumakustischen Eigenschaften ermittelt und die Ergebnisse gegenüber dem sogenannten ihd-Referenzfußbodenaufbau - DPL-Laminatboden (Dicke; 7,2 mm), PUR-Schaumfolie (Dichte: 22 kg/m³, Dicke 3,0 mm), PE-Folie (übliche Dampfbremse, Dicke 0,2 mm) - vergleichend bewertet. Das Trittschallverhalten beim Gehen wurde nach der ihd-Werknorm 431 bestimmt:

Die Versuchsdurchführung erfolgte an folgenden Laminatfußbodenaufbauten:

Variante 1: "Standard": DPL-Laminat (Paneelmaße: 194 x 1290 x 7 mm), PE-Schaumfolie (Dicke: 3 mm), untergelegt, PE-Folie als Feuchtigkeits-Sperre;

Variante 2: DPL-Laminat gemäß Erfindung (Paneelmaße 194 x 1290 x 7,5 mm) mit integrierter PUR-Schaummatte (Dicke: 3 mm), PE-Folie als Feuchtigkeitssperre.

Die Prüfung erfolgte in einem Messraum, in dem eine Betonestrichfläche von 2,40 m Länge, 2 m Breite und ca. 12 cm Dicke mittig eingebaut ist. Es wurden jeweils 15 Messungen des Gehschalls, der beim gleichmäßigen Begehen der ausgelegten Fußbodenaufbauten durch eine Probandin mit Absatzschuhen (Hartgummibelag) entstand, durchgeführt. Zur Charakterisierung der raumakustischen Eigenschaften wurde der Gehschall des ersten Schrittes der Probandin auf der Gehstrecke herangezogen. Als Messgrößen für den entstandenen Gehschall wurde der A-bewertete Gesamtschalldruckpegel über den erfassten Frequenzbereich (25 Hz bis 12500 Hz) in dB (A) sowie die psychoakustische Lautheit in Sone verwendet, die nach der in ihd-Werknorm 431 Version 04/2003 beschriebenen Methode bestimmt wurden.

In den Tabellen 1 und 2 sind die ermittelten Kennwerte der Fußbodenaufbauten vergleichend gegenübergestellt. Die Kennwerte wurden nach Streichung des größten und kleinsten Messwertes (Ausreißerkorrektur) gemäß ihd-Werknorm 431 Version 04/2003 ermittelt.

Das Ergebnis wird als jeweilige Differenz des Gesamtschalldruckpegels bzw. der Lautheit der untersuchten Variante gegenüber dem Referenzaufbau ausgewiesen.

Das Verbesserungsmaß des Gesamtschalldruckpegels ist wie folgt zu bewerten:

+ 0,5 dB (A) -   Verbesserung nur unter guten akustischen Bedingungen wahrnehmbar

+ 1,0 dB (A) -   wahrnehmbare Schwelle für Verbesserungen

+ 3,0 dB (A) -   Halbierung der Signalenergie

+ 6,0 dB (A) -   Halbierung des Schalldrucks

+ 10 dB (A) -    Halbierung der subjektiven Lautstärke

Die Veränderung der linearen Kenngröße Lautheit (N) wird in Bezug auf die Referenz prozentual wie folgt ermittelt.

Prozentuale Änderung:

$$\frac{\left(N_{ref} - N_j\right)}{N_{ref}} * 100\%$$

Der ermittelte Kennwert gibt die prozentuale Erhöhung (negativer Wert) / Verringerung (positiver Wert) der Lautheitsempfindung an.

Tabelle 1: A-bewerteter Gesamtschalldruckpegel

| Var. | Referenz (mittleres Spektrum) ($\llcorner N_{ges.ref}\lrcorner= dB(A)$) | Probe (mittleres Spektrum) ($\llcorner N_{ges.j}\lrcorner= dB(A)$) | Verbesserungsmaß $\Delta L = _{ges.ref} -L_{ges}$ ($[\Delta L]=dB(A)$) |
|---|---|---|---|
| 1 | 73,1 | 71,9 | 1,2 |
| 2 | 73,1 | 67,6 | 5,5 |

Tabelle 2: Lautheit

| Var. | Referenz (mittleres Spektrum) ($\llcorner N_{ref}\lrcorner= Sone$) | Lautheit der Probe (mittleres Spektrum) ($\llcorner N_j\lrcorner= Sone$) | Differenz der Lautheit in Sone | rel. Differenz in % |
|---|---|---|---|---|
| 1 | 22,2 | 21,9 | 0,3 | 1,4 |
| 2 | 22,2 | 17,7 | 4,5 | 20,1 |

Die Variante 1 "Standard" emittierte Gehschall annähernd gleich stark wie der ihd-Referenzfußbodenaufbau.
Die Variante 2 zeichnete sich demgegenüber durch eine Reduzierung der emittierten Schallenergie aus. Die hörbar geringere Schallemission bei Begehung der Variante 2 gegenüber der Variante 1 zeigt sich in Form eines kleineren A-bewerteten Gesamtschalldruckpegels und eines kleineren Lautheitswertes (siehe Tab. 1 und Tab. 2).
Es ergibt sich eine Gehschallverbesserung über dem Standard von ca. + 6 dB(A), d. h. eine Halbierung des Schalldrucks und eine Reduktion des Lautheitswertes über 20 % nach ihd-Werknorm Version 04/2003.
Weiterhin zeichnet sich die erfindungsgemäße Laminatbodenplatte 4 durch ökonomische und ökologische Vorteile aus, da beispielsweise weniger Formaldehydanteil vorhanden ist. Darüber hinaus ist eine Lieferung in Kundenformat mit Bearbeitungsgarantie möglich. Die erfindungsgemäße Laminatbodenplatte 4 kann nach dem Press- und Reifeprozess zu Dielen in gewünschten Maßen geschnitten werden. Diese bereits mit der Dämmlage versehenen Dielen können mit Nut- und Federverbindung gefräst und verkaufsfertig verpackt werden. Als Material der Trägerplatte 5 können HDF-, MDF-, Span- oder Regeneratplatten oder Ähnliches verwendet werden.

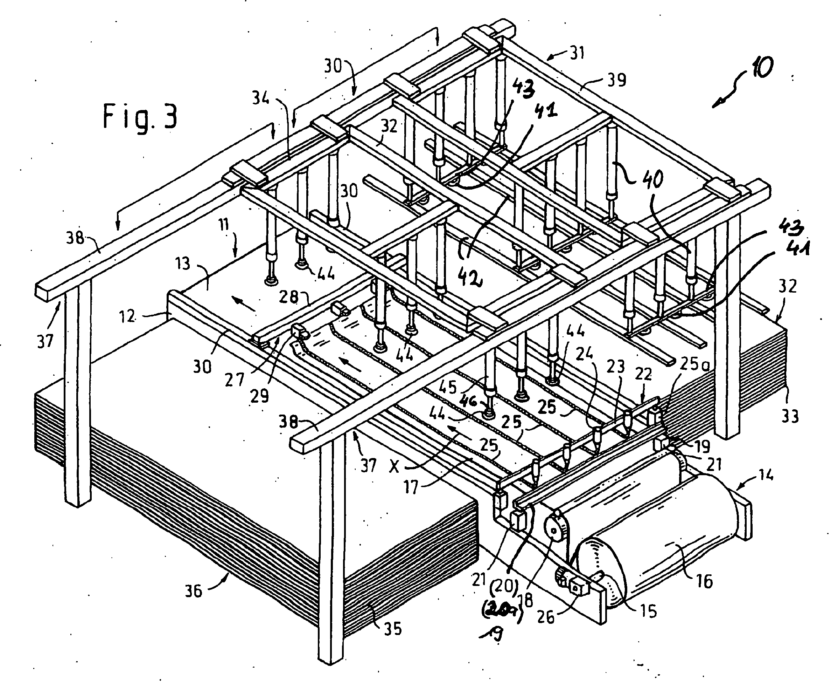

Anhand Fig. 3 wird eine erfindungsgemäße Vorrichtung 10 zur Herstellung eines erfindungsgemäßen Gegenzugimprägnates beschrieben. Wie aus Fig. 3 ersichtlich ist, besteht diese erfindungsgemäße Kaschier-Vorrichtung 10 aus einer Auflagevorrichtung 11, die aus einem Rahmengestell 12 für eine Befestigung auf einer Bodenplatte und einer ebenen Auflagefläche 13 besteht. An einem Ende der Auflagefläche 13 ist eine Abrolleinrichtung 14 angeordnet. Diese Abrolleinrichtung 14 weist eine Lageraufnahme mit einer Lagerachse 15 auf, auf der eine Dämmstoffrolle 16 angeordnet ist, und von der in Abzugsrichtung X eine auf der Dämmstoffrolle 16 aufgerollte Dämmstoffbahn 17 zur Bildung der schalldämmenden Materialschicht 2 des Gegenzugimprägnats abgezogen werden kann. Die Abrolleinrichtung 14 weist weiterhin eine unmittelbar in Abzugsrichtung X hinter der Dämmstoffrolle 16 im Rahmengestell 12 gelagerte Umlenkrolle 18 für die Dämmstoffbahn 17 auf.

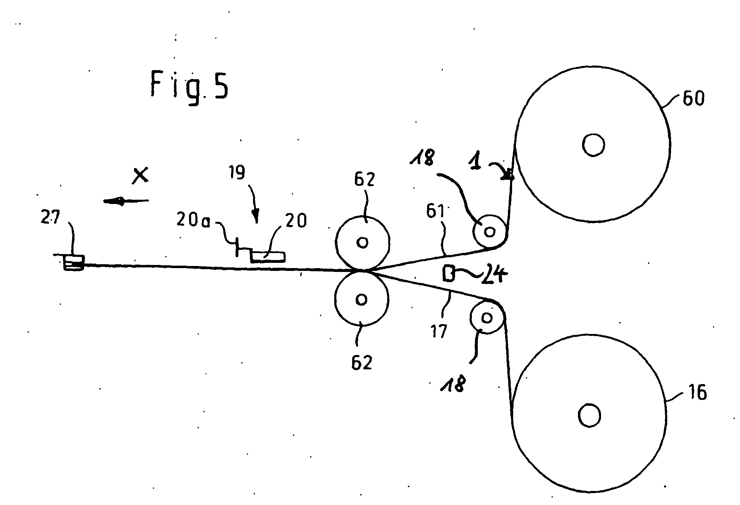

In Abzugsrichtung X hinter der Umlenkrolle 18 ist am Rahmengestell 12 ein Querschneider 19 befestigt. Dieser besteht z. B. aus einer oberhalb der Dämmstoffbahn 17 bzw. der Auflagefläche 13 quer, insbesondere senkrecht, zur Abzugsrichtung X verlaufenden Klemmleiste 20, an der ein Kreismesser 20a verfahrbar geführt ist, wie dies Fig. 5 zu entnehmen ist. Die Klemmleiste 20 ist mittels beidendig an dieser befestigten Aktoren zum Abschneiden bzw. Ablängen der Dämmstoffbahn 17 absenkbar und wieder anhebbar.

In Abzugsrichtung X hinter dem Querschneider 19 ist eine Klebstoff-Auftragvorrichtung 22 angeordnet. Diese Auftragvorrichtung 22 besteht aus einem quer, insbesondere senkrecht zur Abzugsrichtung X verlaufenden Träger 23, an dem in Richtung auf die Auflagefläche 13 gerichtete Auftragdüsen 24 befestigt sind. Der Träger 23 ist an seinen Enden an Aktoren 25a befestigt, mit denen der Träger 23 mit den Auftragdüsen 24 zum Auftragen eines Klebers auf die Dämmstoffbahn 17 in Richtung auf die Auflagefläche 13 abgesenkt und wieder angehoben werden kann. Im dargestellten Ausführungsbeispiel sind vier gleich beabstandete Auftragdüsen 24 für die Klebebeschichtung 3 vorhanden, mit denen vier Kleberspuren 25 auf die Dämmstoffbahn 17 aufgebracht werden können. Jedoch liegt es ebenfalls im Rahmen der Erfindung, mehr oder weniger viele Auftragdüsen 24 vorzusehen. Das Beschichtungsgewicht beträgt dabei vorzugsweise im Durchschnitt 10 g/mm$^2$.

Weiterhin weist die Auflagevorrichtung 11 eine Greifvorrichtung 27 auf, mit der die von der Dämmstoffrolle 16 abzuziehende Dämmstoffbahn 17 ergriffen und in Richtung der Abzugsrichtung X über die Auflagefläche 13 gezogen werden kann, bis das gewünschte Ablängmaß für die Dämmstoffbahn 17 erreicht ist. Die Greifvorrichtung 27 besteht aus einem quer, insbesondere senkrecht, zur Abzugsrichtung X verlaufenden Balken 28, an dem Greifer 29, im dargestellten Beispiel drei - voneinander gleich beabstandete - Greifer 29, befestigt sind. Diese Greifer 29 sind elektrisch oder pneumatisch betätigbar und sind derart ausgebildet, dass das freie Ende der Dämmstoffbahn 17 sicher gegriffen und fixiert und nach dem Ablängen wieder freigegeben werden kann. Der Balken 28 ist an seinen Enden an Führungsleisten 30 an einer Antriebseinrichtung, insbesondere Linearantriebseinrichtung gelagert. Diese Linearantriebseinrichtung ist in bekannter Weise ausgebildet und deshalb nicht näher beschrieben. Für ein leichtes Abziehen der Dämmstoffbahn 17 von der Dämmstoffrolle 16 ist ein die Lagerachse 15 antreibender Elektromotor 26 vorgesehen, wodurch auch der Abzug der Dämmstoffbahn 17 mittels der Greifeinrichtung 27 unterstützt werden kann, weshalb die Geschwindigkeit der Abzugsbewegung der Greifer 29 in Abzugsrichtung X mittels des Linearantriebs und die Antriebsgeschwindigkeit des Elektromotors 26 vorteilhafterweise steuerungsmäßig aufeinander abstimmbar sind.

Die Auflagevorrichtung 11 besteht weiterhin aus einer Anhebe-, Ablege- und Transportvorrichtung 31, mit der auf einer Seite neben der Auflagefläche 13 zu einem Papierstapel 32 gestapelte imprägnierte Papier-Zuschnitte 33, die dem Gegenzugpapier (imprägniertes Papier 1) gemäß Fig. 1 entsprechen, angehoben, quer, insbesondere senkrecht, zur Abzugsrichtung X transportiert und anschließend aus einer Stellung oberhalb der Auflagefläche 13 wieder abgesenkt werden können.

Mit einer weiteren Transportvorrichtung 34 können auf der Auflagefläche 13 gefertigte Zuschnitte 35 erfindungsgemäßer Gegenzugimprägnate, wie in Fig. 1 beschrieben, von der Auflagefläche 13 angehoben, quer, insbesondere senkrecht, zur Abzugsrichtung X transportiert und zu einem Stapel 36 abgelegt werden, der zu dem Papierstapel 32 parallel zur Auflagefläche 13 - seitlich von dieser - gegenüberliegend angeordnet ist.

Die beiden Transportvorrichtungen 31, 34 sind in zwei quer, insbesondere senkrecht, zur Abzugsrichtung X und parallel zueinander angeordneten Portalträgern 37 an deren horizontalen Trägerabschnitten 38 verschiebbar geführt und über einen üblichen Linearantrieb oder dergleichen unabhängig voneinander verfahrbar.

Die Transportvorrichtung 31 besteht dabei aus einem Transportrahmen 39, an dem über pneumatisch oder hydraulische Kolben-Zylinder-Einheiten 40 absenkbare und hochziehbare Sauger 41 und Andrückleisten 42 befestigt sind. Die Sauger 41 und Andrückleisten 42 liegen mit ihren Auflageflächen für die Papier-Zuschnitte 33 in derselben Ebene, die parallel zu den gestapelten Papier-Zuschnitten 33 verläuft.

Im dargestellten Ausführungsbeispiel sind drei parallel angeordnete Reihen à vier Kolben-Zylinder-Einheiten 40 und à drei Sauger 41 vorhanden. Hierbei sind die Sauger 41 jeder Reihe an einer insbesondere senkrecht zur Abzugsrichtung X verlaufenden Trägerleiste 43 befestigt. Zudem sind vier parallel zueinander und senkrecht zu den Trägerleisten 43 verlaufende Andrückleisten 42 vorgesehen. Jeweils eine der Andrückleisten 42 ist an den freien Enden der Trägerleisten 43 angeordnet, und die beiden anderen Andrückleisten 42 sind derart angeordnet, dass der Abstand zu den benachbarten Andrückleisten 42 einer Einheit 40 und ihr gegenseitiger Abstand gleich groß ist.

Die Transporteinrichtung 34 für die erfindungsgemäßen Gegenzugimprägnat-Zuschnitte 35 besitzt im Wesentlichen den gleichen Aufbau in Bezug auf die Anordnung und Ausbildung des Transportrahmens und der Befestigung von Saugern 44 an Kolben-Zylinder-Anordnungen 45. Jedoch sind hierbei die Sauger 44 unmittelbar quer jeweils am freien Ende der Kolbenstange 46 einer Kolben-Zylinder-Anordnung 45 befestigt. Zudem sind keine Andrückleisten erforderlich. Bei den Saugern 41, 44 wird die Saugwirkung durch Erzeugung von Unterdruck erreicht. In einer bevorzugten Ausführungsform besitzen die Papier-Zuschnitte 33 und die Gegenzugimprägnat-Zuschnitte 35 eine Länge von 2400 bis 5700 mm und eine Breite von 1260 bis 2080 mm.

Die Arbeitsweise der erfindungsgemäßen Kaschier-Vorrichtung 10 ist wie folgt. Sobald der Papierstapel 32 aus Papier-Zuschnitten 33 und die Dämmstoffrolle 16 bereitgestellt sind, wird die Greifvorrichtung 27 unmittelbar an den Querschneider 19 herangefahren, um das freie Ende der von der Dämmstoffrolle 16 um die erforderliche Länge bis zum Querschneider 19 abgezogenen Dämmstoffbahn 17 zu ergreifen und zu fixieren. Die Breite des Papier-Zuschnitts 33 ist an die Breite der Dämmstoffbahn 17 angepaßt.

Sobald die Dämmstoffbahn 17 von den Greifern 29 gegriffen ist, wird die Dämmstoffbahn 17 durch Verfahren der Greifvorrichtung 27 mittels des Linearantriebs in Abzugsrichtung X verfahren und hierdurch die Dämmstoffbahn 17 über die Auflagefläche 13 gezogen, bis die gewünschte Länge der auf der Auflagefläche 13 liegenden Bahn 17 erreicht ist. Während des Abziehvorgangs werden über die Auftragdüsen 24 die Klebespuren 25 auf die Dämmstoffbahn 17 aufgebracht. Mit Beendigung des Abziehvorgangs wird auch der Klebeauftrag beendet. Hiernach wird die Klemmleiste 20 des Querschneiders 19 abgesenkt und die Dämmstoffbahn 17 fixiert und mit dem Kreismesser 20a (Fig. 5) abgelängt.

Mittels der Transporteinrichtung 31 wird nunmehr ein Papier-Zuschnitt 33 von dem Papierstapel 32 abgehoben. Hierzu wird die Transporteinrichtung 31 über dem Papierstapel 32 positioniert und die Sauger 41 werden mit den Andrückleisten 42 abgesenkt, bis sie auf dem obersten Papier-Zuschnitt 33 aufliegen. Nun wird in den Saugern 41 ein Unterdruck erzeugt und somit der Papier-Zuschnitt 33 unter Anlage an den Andrückleisten 42 fixiert. In diesem Zustand werden die Sauger 41 und die Andruckleisten 42 angehoben und die Transportvorrichtung 31 soweit verfahren, bis sie genau oberhalb der Dämmstoffbahn 17 positioniert ist.

Aus dieser Stellung wird der Papier-Zuschnitt 33 auf die Dämmstoffbahn 17 abgesenkt und auf dieser abgelegt, wobei mittels der Andrückleisten 42 der Papier-Zuschnitt 33 gegen die Dämmstoffbahn 17 angedrückt wird. Da die Andrückleisten 42 derart angeordnet sind, dass sie oberhalb der Klebespuren 25 verlaufen, erfolgt dort der maximale Anpressdruck, wo der Klebeauftrag vorhanden ist. Hierdurch wird eine gute und sichere Klebeverbindung zwischen der Dämmstoffbahn 17 und dem Papier-Zuschnitt 33 erreicht.

Nunmehr wird der Unterdruck in den Saugern 41 aufgehoben, so dass diese mit den Andruckleisten 42 angehoben und die Transporteinrichtung 31 wieder über den Papierstapel 32 verfahren werden kann.

Danach wird die Transporteinrichtung 34, die bis zu diesem Zeitpunkt über dem Gegenzugimprägnat-Stapel 36 positioniert war, über die beschichtete Dämmstoffbahn 17 verfahren und exakt über dieser ausgerichtet. Aus dieser Stellung werden die Sauger 44 auf die Oberfläche der beschichteten Dämmstoffbahn 17 abgesenkt.

In der Anlagestellung der Sauger 44 wird in diesen Unterdruck erzeugt und somit die beschichtete Dämmstoffbahn 17 an den Saugern 44 fixiert. Es werden nunmehr die Greifer 29 geöffnet und zurückgezogen sowie die Klemmleiste 20 angehoben, so dass die zugeschnittene und beschichtete Dämmstoffbahn 17, die den erfindungsgemäßen Gegenzugimprägnat-Zuschnitt 35 bildet, angehoben und über den Stapel 36 verfahren werden kann. Aus dieser Stellung wird der Gegenzugimprägnat-Zuschnitt 35 abgesenkt und in der abgesenkten Stellung wird der Unterdruck in den Saugern 44 aufgehoben. Danach beginnt das vorstehend beschriebene Verfahren erneut.

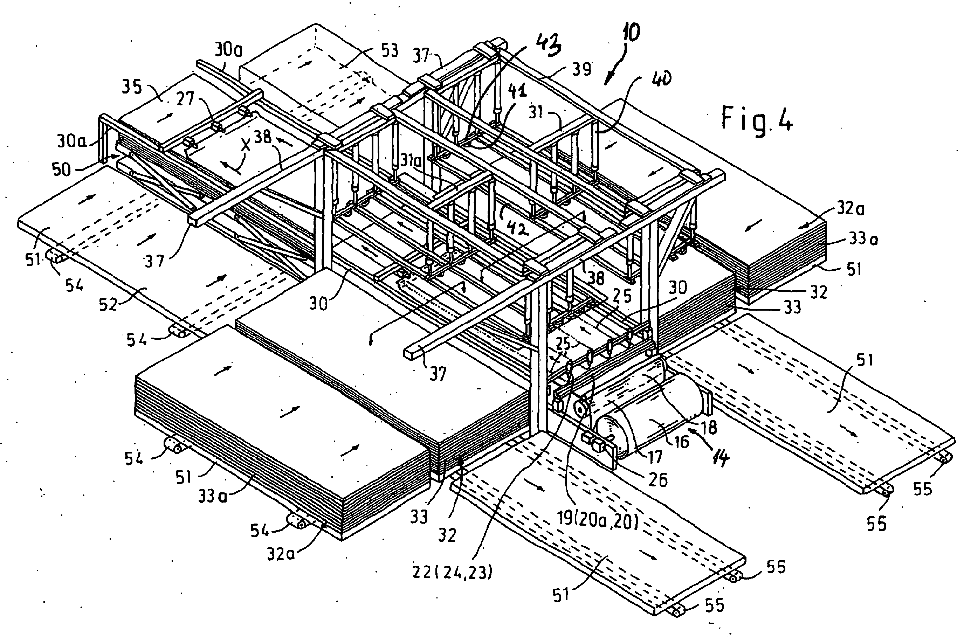

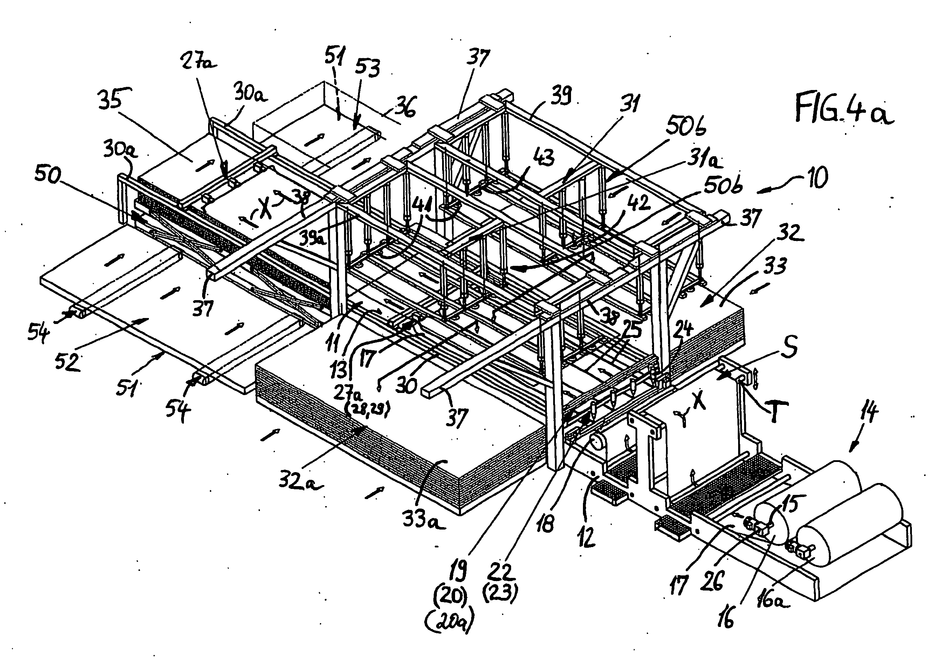

Die in Fig. 4 dargestellte weitere Ausführung einer erfindungsgemäßen Vorrichtung zur Herstellung eines erfindungsgemäßen Gegenzugimprägnates stimmt in ihrem Grundaufbau mit der in Fig. 3 gezeigten Ausführung überein. Insofern wird - falls nicht im Folgenden anders beschrieben - in vollem Umfang auf die vorstehenden Ausführungen verwiesen. Die zweite Ausführung der erfindungsgemäßen Vorrichtung zeichnet sich durch eine höhere Leistungsfähigkeit aus, die durch einige effizienzsteigernde Maßnahmen, insbesondere Maßnahmen logistischer Art, erzielt wird.

So wird aus der Darstellung zunächst deutlich, dass dem Gegenzugpapier (imprägniertem Papier 1) gemäß Fig. 1 entsprechende, jeweils zu einem Papierstapel 32 gestapelte imprägnierte Papier-Zuschnitte 33, auf beiden Seiten neben der Auflagefläche 13 der Auflagevorrichtung 11 angeordnet sind. Dadurch kann bei der Papierzuführung eine kürzere Taktzeit erreicht werden. Zur Zuführung des Gegenzugpapiers 1 dienen dabei zwei den beiden Papierstapeln 32 zugeordnete Anhebe-, Ablege und Transportvorrichtung 31, 31 a, mittels derer die gestapelten imprägnierten Papier-Zuschnitte 33 angehoben, quer, insbesondere senkrecht, zur Abzugsrichtung X transportiert und anschließend aus einer Stellung oberhalb der Auflagefläche 13 wieder abgesenkt werden können. Der Aufbau der beiden Anhebe-, Ablege und Transportvorrichtungen 31, 31 a entspricht dabei demjenigen, der für die Transportvorrichtung 31 der Papier-Zuschnitte 33 unter Bezug auf Fig. 3 beschrieben wurde. Die zweite Transportvorrichtung 31 a nimmt in der in Fig. 4 dargestellten Ausführung den Platz der Anhebe-, Ablege-·und Transportvorrichtung 34 für die fertigen Gegenzugimprägnat-Zuschnitte 35 ein, wobei letztere in der dargestellten Ausführung nicht quer, sondern längs zur Abzugsrichtung X von der Auflagefläche 13 abgefördert werden. Dazu dient die beschriebene Greifvorrichtung 27, mit der die von der Dämmstoffrolle 16 abzuziehende Dämmstoffbahn 17 ergriffen und in Richtung der Abzugsrichtung X über die Auflagefläche 13 gezogen werden kann. Die Abförderung längs zur Abzugsrichtung X wird dabei dadurch möglich, dass durch das Vorhandensein von sich in Abzugsrichtung X an die seitlich der Auflagefläche 13 verlaufenden Führungsleisten 30 anschließenden Führungsstangen 30a für die Greifeinrichtung 27 ein verlängerter Förderweg geschaffen ist. Hinter der Auflagefläche 13 ist dabei ein Hubtisch 50 angeordnet, welcher der Aufnahme der von der Auflagefläche 13 abgeförderten Gegenzugimprägnat-Zuschnitte 35 dient, wobei diese wiederum durch die Höhenverstellbarkeit des Hubtisches 50 in einfacher Weise, insbesondere auf einer Palette 51, einen Stapel 36 bilden können.

Dem Hubtisch 50 ist mindestens ein Querförderer 54 zugeordnet, mittels dessen unbestapelte Paletten 51 von der Seite her auf den Hubtisch 50 gebracht und bestapelte Paletten 51 ebenfalls seitlich, insbesondere auf der entgegengesetzten Seite des Hubtisches 50, abtransportiert werden können. Zur Realisierung dieser Transportvorgänge ist in Fig. 4 ein Bereitstellungsplatz 52 für die unbestapelten Paletten 51 und ein Speicherplatz 53 für die mit dem Gegenzug-Imprägnat-Stapel 36 beladenen Paletten 51 dargestellt.

Auch die jeweils zu Papierstapeln 32 gestapelten imprägnierten Papier-Zuschnitte 33 können auf Paletten 51 angeliefert werden, wobei diese Paletten 51 die gleichen sein können, die dem Transport der Gegenzugimprägnat-Zuschnitte 35 dienen. Desgleichen können auch für die Papier-Zuschnitte 33 - bzw. deren Stapel 32 - Bereitstellungsplätze, insbesondere in Richtung der Abzugsrichtung X gesehen seitlich der der unmittelbaren Papierzuführung zur Auflagefläche 13 dienenden Stapel 32 vorgesehen sein, was durch die Bezugszeichen 33a und 32a in Fig. 4 und die zugeordneten Querförderer 54 veranschaulicht ist. Die Abförderung der von den Papierzuschnitten 33 entleerten Paletten 51 kann dann jeweils mit Hilfe von Längsförderern 55 entgegengesetzt zur Abzugsrichtung X realisiert werden, wie dies ebenfalls aus Fig. 4 zu entnehmen ist.

Anhand Fig. 4a wird eine weitere erfindungsgemäße Vorrichtung 10 zur Herstellung eines erfindungsgemäßen Gegenzugimprägnats beschrieben. Wie aus Fig. 4a ersichtlich ist, besteht diese erfindungsgemäße Kaschier-Vorrichtung 10 aus einer Auflagevorrichtung 11, die aus einem Rahmengestell 12 für eine Befestigung auf einer Bodenplatte und einer ebenen Auflagefläche 13 besteht. An einem Ende der Auflagefläche 13 ist eine Abrolleinrichtung 14 angeordnet. Diese Abrolleinrichtung 14 weist eine Lageraufnahme mit einer Lagerachse 15 auf, auf der eine Dämmstoffrolle 16 angeordnet ist, und von der in Abzugsrichtung X eine auf der Dämmstoffrolle 16 aufgerollte Dämmstoffbahn 17 zur Bildung der schalldämmenden Materialschicht 2 des Gegenzugimprägnats abgezogen werden kann. Die Abrolleinrichtung 14 kann eine zusätzliche Reserverolle 16a aufweisen. In Abzugsrichtung X hinter der Abrolleinrichtung 14 ist im Rahmengestell 12 eine Umlenkrolle 18 für die Dämmstoffbahn 17 gelagert. Zwischen der Abrolleinrichtung 14 und der Umlenkrolle 18 kann - wie dargestellt - eine Speichereinrichtung S für die Dämmstoffbahn 17 mit vertikal beweglichen Tänzerrollen T angeordnet sein.

In Abzugsrichtung X hinter der Umlenkrolle 18 ist am Rahmengestell 12 ein Querschneider 19 befestigt. Dieser besteht z. B. aus einer oberhalb der Dämmstoffbahn 17 bzw. der Auflagefläche quer, insbesondere senkrecht, zur Abzugsrichtung X verlaufenden Klemmleiste 20 an der ein nur in Fig. 5 dargestelltes Kreismesser 20a verfahrbar geführt ist. Die Klemmleiste 20 ist mittels beidendig an dieser befestigter Aktoren zum Festhalten der Dämmstoffbahn absenkbar und anhebbar, während das Kreismesser verfahrbar geführt die Dämmstoffbahn 17 abschneidet.

In Abzugsrichtung X vor dem Querschneider 19 ist eine Klebstoff-Auftragvorrichtung 22 angeordnet. Diese Auftragvorrichtung 22 besteht aus einem quer, insbesondere senkrecht zur Abzugsrichtung X verlaufenden Träger 23, an dem in Richtung auf die Auflagefläche 13 gerichtete Auftragdüsen 24 befestigt sind. Über die Auftragdüsen 24 wird der Kleber auf die Dämmstoffbahn 17 aufgesprüht.

Im dargestellten Ausführungsbeispiel sind vier beabstandete Auftragdüsen 24 für die Klebebeschichtung vorhanden, mit denen vier Kleberspuren 25 auf die Dämmstoffbahn 17 aufgebracht werden können. Jedoch liegt es ebenfalls im Rahmen der Erfindung, mehr oder weniger viele Auftragdüsen 24 vorzusehen. Das Beschichtungsgewicht beträgt dabei vorzugsweise im Durchschnitt 10 g/m². 

Weiterhin weist die Auflagevorrichtung 11 eine Greifvorrichtung 27a auf, mit der die von der Dämmstoffrolle 16 abzuziehende Dämmstoffbahn 17 ergriffen und in Abzugsrichtung X über die Auflagefläche 13 gezogen werden kann, bis das gewünschte Ablängmaß für die Dämmstoffbahn 17 erreicht ist. Die Greifvorrichtung 27a besteht aus einem quer, insbesondere senkrecht, zur Abzugsrichtung X verlaufenden Balken 28, an dem Greifer 29, im dargestellten Beispiel drei voneinander gleich beabstandete, Greifer 29 befestigt sind. Diese Greifer 29 sind elektrisch oder pneumatisch betätigbar und derart ausgebildet, dass das freie Ende der Dämmstoffbahn 17 sicher gegriffen und fixiert und nach dem Ablängen wieder freigegeben werden kann. Der Balken 28 ist an seinen Enden an Führungsleisten 30 einer Antriebseinrichtung, insbesondere Linearantriebseinrichtung gelagert. Diese Linearantriebseinrichtung ist in bekannter Weise ausgebildet und deshalb nicht näher beschrieben. Für ein leichtes Abziehen der Dämmstoffbahn 17 von der Dämmstoffrolle 16 ist ein die Lagerachse 15 antreibender Elektromotor 26 vorgesehen, wodurch auch der Abzug der Dämmstoffbahn 17 mittels der Greifvorrichtung 27a unterstützt werden kann, weshalb die Geschwindigkeit der Abzugsbewegung der Greifer in Abzugsrichtung X mittels des Linearantriebs und die Antriebsgeschwindigkeit des Elektromotors 26 vorteilhafterweise steuerungsmäßig aufeinander abstimmbar sind.

Die Auflagevorrichtung 11 besteht weiterhin aus einer Anhebe-, Ablege- und Transportvorrichtung 31, mit der auf einer Seite neben der Auflagefläche 13 zu einem Papierstapel 32 gestapelte imprägnierte Papier-Zuschnitte 33, die dem Gegenzugpapier (imprägniertes Papier 1) gemäß Fig. 1 entsprechen, angehoben, quer, insbesondere senkrecht, zur Abzugsrichtung X transportiert und anschließend aus einer Stellung oberhalb der Auflagefläche 13 wieder abgesenkt werden können.

Mit einer weiteren Transportvorrichtung 31 a können auf der Auflagefläche 13 gefertigte Zuschnitte 35 erfindungsgemäßer Gegenzugimprägnate, wie in Fig. 1 beschrieben, von der Auflagefläche 13 angehoben, quer, insbesondere senkrecht, zur Abzugsrichtung X transportiert und zu einem Stapel abgelegt werden.

Die beiden Transportvorrichtungen 31, 31a sind in zwei quer, insbesondere senkrecht, zur Abzugsrichtung X und parallel zueinander angeordneten Portalträgern 37 an deren horizontalen Trägerabschnitten 38 verschiebbar geführt und über einen üblichen Linearantrieb oder dergleichen unabhängig voneinander verfahrbar.

Die Transportvorrichtung 31, 31a besteht dabei aus einem Transportrahmen 39, 39a, an dem über pneumatische oder hydraulische Hubeinrichtungen 50a, 50b, die den Kolben-Zylinder-Einheiten 40 in Fig. 3 und 4 entsprechen, absenkbare und hochziehbare Sauger 41 unterhalb befestigt sind. Die Sauger 41 liegen mit ihren Auflageflächen für die Papier-Zuschnitte 33, 33a in derselben Ebene, die parallel zu den gestapelten Papier-Zuschnitten 33, 33a verläuft.

Im dargestellten Ausführungsbeispiel sind zwei Hubeinrichtungen 50a, 50b mit ca. sechsundsechzig Saugern 41 vorhanden. Hierbei sind die Sauger 41 jeder Reihe an einer insbesondere senkrecht zur Abzugsrichtung X verlaufenden Trägerrahmen 43 befestigt.

Die Transporteinrichtung 31, 31 a für die erfindungsgemäßen Gegenzugimprägnat-Zuschnitte 35 besitzt im Wesentlichen den gleichen Aufbau in Bezug auf die Anordnung und Ausbildung des Transportrahmens und der Befestigung von Saugern 41 an dem Portalrahmen.

Bei den Saugern 41 wird die Saugwirkung durch Erzeugung von Unterdruck erreicht. In einer bevorzugten Ausführungsform besitzen die Papier-Zuschnitte 33 und die Gegenzugimprägnat-Zuschnitte 35 eine Länge von 2.400 bis 5.700 mm und einer Breite von 2.050 bis 2.090 mm.

Die Arbeitsweise der erfindungsgemäßen Kaschier-Vorrichtung 10 ist wie folgt. Sobald der Papierstapel 32 aus Papier-Zuschnitten 33 und die Dämmstoffrolle 16 bereitgestellt sind, wird die Greifvorrichtung 27a unmittelbar an den Querschneider 19 herangefahren, um das freie Ende der von der Dämmstoffrolle 16 um die erforderliche Länge bis zum Querschneider 19 abgezogenen Dämmstoffbahn 17 zu ergreifen und zu fixieren. Die Breite des Papier-Zuschnitts 33, 33a ist an die Breite der Dämmstoffbahn 17 nach Kundenanforderung angepasst.

Sobald die Dämmstoffbahn 17 von den Greifern 29 gegriffen ist, wird die Dämmstoffbahn 17 durch Verfahren der Greifvorrichtung 27a des Linearantriebs in Abzugsrichtung X verfahren und hierdurch die Dämmstoffbahn 17 über die Auflagefläche 13 gezogen, bis die gewünschte Länge der auf der Auflagefläche 13 liegenden Bahn 17 erreicht ist. Während des Abziehvorgangs werden über die Auftragsdüsen 24 Klebespuren 26 auf die Dämmstoffbahn 17 aufgebracht. Mit Beendigung des Abziehvorgangs wird auch der Klebeauftrag beendet.

Hiernach wird die Klemmleiste 20 des Querschneiders 19 abgesenkt und die Dämmstoffbahn 17 fixiert und mit dem Kreismesser abgelängt.

Mittels der Transporteinrichtung 31, 31a wird im Wechsel nunmehr ein Papier-Zuschnitt 33, 33a von dem Papierstapel 32, 32a abgehoben. Hierzu wird die Transporteinrichtung 31, 31 a über dem Papierstapel 32, 32a positioniert und die Sauger 41 abgesenkt, bis sie auf dem obersten Papier-Zuschnitt 33, 33a aufliegen. Nun wird in den Saugern 41 ein Unterdruck erzeugt und somit der Papier-Zuschnitt 33, 33a fixiert. In diesem Zustand werden die Sauger 41 mit dem Papier-Zuschnitt 33, 33a angehoben und die Transportvorrichtung 31, 31 a soweit verfahren, bis sie genau oberhalb der Dämmstoffbahn 17 positioniert sind.

Aus dieser Stellung wird der Papier-Zuschnitt 33, 33a zur Dämmstoffbahn 17 abgesenkt und auf dieser abgelegt, wobei der Papier-Zuschnitt 33, 33a gegen die Dämmstoffbahn 17, wo der Klebeauftrag vorhanden ist, mit den Saugern 41 angedrückt wird.

Hierdurch wird eine gute und sichere Klebeverbindung zwischen der Dämmstoffbahn 17 und dem Papier-Zuschnitt 33, 33a erreicht.

Nunmehr wird der Unterdruck in den Saugern 41 aufgehoben, so dass der Scherenhubtisch 50 angehoben und die Transporteinrichtung 31, 31 a wieder über den Papierstapel 32, 32a verfahren werden kann.

So wird aus der Darstellung zunächst deutlich, dass dem Gegenzugpapier (imprägnierten Papier 1) gemäß Fig. 1 entsprechende, jeweils zu einem Papierstapel 32, 32a, gestapelte imprägnierte Papier-Zuschnitte 33, 33a auf beiden Seiten neben der Auflagefläche 13 der Auflagevorrichtung 11 angeordnet sind. Dadurch kann bei der Papierzuführung eine kürzere Taktzeit erreicht werden. Zur Zuführung des Gegenzugpapiers 1 dienen dabei zwei den beiden Papierstapeln 32, 32a zugeordnete Anhebe-, Ablege- und Transportvorrichtungen 31, 31 a, mittels derer die gestapelten imprägnierten Papier-Zuschnitte 33, 33a angehoben, insbesondere senkrecht, zur Abzugsrichtung X transportiert und anschließend aus einer Stellung oberhalb der Auflagefläche 13 wieder abgesenkt werden können. Der Aufbau der beiden Anhebe-, Ablege- und Transportvorrichtungen 31, 31 a entspricht dabei demjenigen, der für die Transportvorrichtung 31 der Papier-Zuschnitte 33, unter Bezug auf Fig. 3 beschrieben wurde. Die zweite Transportvorrichtung 31 a nimmt in der in Fig. 4a dargestellten Ausführung den Platz der Anhebe-, Ablege- und Transportvorrichtung 34 für die fertigen Gegenzugimprägnat-Zuschnitte 35 ein, wobei letztere in der dargestellten Ausführung nicht quer, sondern längs zur Abzugsrichtung X von der Auflagefläche 13 abgefördert werden. Dazu dient die beschriebene Greifvorrichtung 27a, mit der die von der Dämmstoffrolle 16 abzuziehende Dämmstoffbahn 17 ergriffen und in Richtung der Abzugsrichtung X über die Auflagefläche 13 gezogen werden kann. Die Abförderung längs zur Abzugsrichtung X wird dabei dadurch möglich, dass durch das Vorhandensein von sich in Abzugsrichtung X an die seitlich der Auflagefläche 13 verlaufenden Führungsleisten 30 anschließenden Führungsstangen 30a für die Greifvorrichtung 27a ein verlängerter Förderweg geschaffen ist. Hinter der Auflagefläche 13 ist dabei ein Hubtisch 50 angeordnet, welcher der Aufnahme der von der Auflagefläche 13 abgeförderten Gegenzugimprägnat-Zuschnitte 35 dient, wobei diese wiederum durch die Höhenverstellbarkeit des Hubtisches 50 in einfacher Weise, insbesondere auf einer Palette 51, einen Stapel 36 bilden können.

Dem Hubtisch 50 ist ein Querförderer 54 zugeordnet, mit dem unbestapelte Paletten 51 von der Seite her auf den Hubtisch 50 gebracht und bestapelte Paletten 51 ebenfalls seitlich, insbesondere auf der entgegengesetzten Seite des Hubtisches 50, abtransportiert werden können. Zur Realisierung dieser Transportvorgänge ist in Fig. 4a ein Bereitstellungsplatz 52 für die unbestapelten Paletten 51 und ein Speicherplatz 53 für die mit dem Gegenzugimprägnat-Stapel 36 beladenen Paletten 51 dargestellt.

In Fig. 5 ist eine Prinzipdarstellung einer weiteren erfindungsgemäßen Ausführungsform einer Vorrichtung zur Herstellung eines erfindungsgemäßen Gegenzugimprägnates dargestellt. Diese ermöglicht die Herstellung eines Gegenzugimprägnats nach Fig. 1 unter Verwendung von in Rollenform angeliefertem, imprägniertem Gegenzugpapier 1. Gleiche Teile wie in den Fig. 3 und 4 sind mit denselben Bezugsziffern gekennzeichnet. Bei dieser Vorrichtung ist oberhalb der Dämmstoffrolle 16, wie in Fig. 3 und 4 dargestellt, eine Rolle 60 aus aufgerolltem, imprägniertem Gegenzugpapier 1 gelagert. Eine Gegenzugpapierbahn 61 wird in Abzugsrichtung X abgezogen. In Abzugsrichtung X hinter der Umlenkrolle 18 sind die Auftragdüsen 24 zum Aufbringen des Klebers (Kleberbeschichtung 3) angeordnet. Hinter den Auftragdüsen 24 befindet sich ein Paar übereinander angeordneter Andrückrollen 62, wobei durch deren Rollenspalt die Gegenzugpa pierbahn 61 und die Dämmstoffbahn 17 gemeinsam übereinander liegend hindurch gezogen und aneinander gedrückt werden, so dass eine Verklebung erfolgt. In Abzugsrichtung hinter den Andrückrollen 62 ist die Klemmleiste 20 mit dem Querschneider 19 angeordnet. Mittels der Greifvorrichtung 27 werden die freien Enden der übereinander liegenden Gegenzugpapierbahn 61 und der Dämmstoffbahn 17 gegriffen und diese in Abzugsrichtung X gezogen, und zwar bis die gewünschte Länge des Gegenzugimprägnates erreicht wird. Sobald diese Länge erreicht ist, wird die Abzugsbewegung gestoppt und das Gegenzugimprägnat abgelängt und anschließend in Abzugsrichtung weiter transportiert, wozu auf die Ausführungsform gemäß Fig. 4 verwiesen werden kann. Die Ausführungsform gemäß Fig. 5 benötigt konstruktiv den geringsten Aufwand und ermöglicht die höchste Fertigungsgeschwindigkeit.

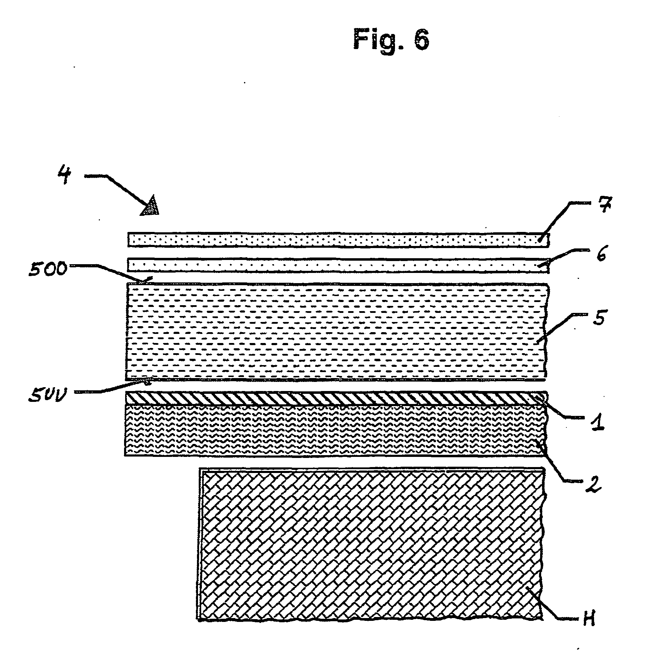

Bei der in Fig. 6 dargestellten weiteren Ausführung einer zur Veranschaulichung ihres bevorzugten Herstellungsverfahrens in Explosionsdarstellung gezeigten erfindungsgemäßen Laminatbodenplatte 4 werden zur Bezeichnung einander entsprechender Teile die gleichen Bezugszeichen wie in Fig. 2 verwendet.

Die erfindungsgemäße Laminatbodenplatte 4 dient zur Herstellung eines aus Schichten aufgebauten Fußbodenbelages, und enthält einen bereits vorstehend als Trägerplatte 5 bezeichneten Kern auf Holzbasis, der speziell aus einer Holzderivatplatte vorn Typ HDF oder MDF oder auch aus synthetischen oder aus Kunststoff bestehenden Recyclingmaterial-Teilchen hergestellt sein kann. Auf der Oberfläche 5OO desselben befinden sich ein dekorativer Überzug, insbesondere ein imprägniertes Dekorpapier 6, und ein Overlay 7. Auf der Unterseite 5UU ist als Ausgleichelement ein Verbund aus einem imprägnierten Gegenzugpapier 1 und einer isolierenden Unterschicht 2 angeordnet.

Die isolierende Unterschicht 2 kann beispielsweise eine geräusch- oder temperaturdämmende Materialschicht sein, um den Fußbodenbelag gegenüber der Oberfläche, auf die er aufgebracht wird, gegen Geräusche, Temperatur oder anderes zu isolieren. Die isolierende Unterschicht 2 kann aus verschiedenen Materialien entsprechend der gewünschten Isolierung bestehen, insbesondere und beispielsweise aus Kork, aus gepressten Holzspänen mit geringer Dichte, aus Polyurethan oder aus einer Folie aus synthetischen Fasern.

Um die isolierende Unterschicht 2 an der Laminatbodenplatte 4 zu fixieren, wird die Unterschicht 2 zunächst mit dem Papier 1 verbunden, bevor die anderen Schichten, die dann insgesamt die genannte Platte 4 bilden sollen, vor einer Eingabe in eine Pressvorrichtung übereinander gelegt werden. Dieser Arbeitsgang ermöglicht es, die Schichten zu stabilisieren, die dazu bestimmt sind, unterhalb der Oberfläche 5UU des Kerns der Platte 4 angebracht zu werden. Diese verbesserte Stabilität verhindert, dass sich die Ränder der unteren Schichten unter ihrem Eigengewicht biegen oder verwölben.

Zur Fixation der Unterschicht 2 am Papier 1 sind vor dem Pressvorgang für alle Schichten, die die genannte Laminatbodenplatte 4 bilden sollen, Haftmittel vorgesehen. Die Haftung kann dabei - wie bei der Ausführung gemäß Fig. 2 - durch Verkleben der isolierenden Unterschicht 2 mit dem Papier mittels eines Bindemittels (Klebebeschichtung 3), wie Harz, beispielsweise vom Typ Melamin, erfolgen. Das Bindemittel kann direkt vor dem Kontakt der beiden Oberflächen der Unterschicht 2 und des Papiers 1 oder auch einer Folie aufgetragen werden.

Die Haftung kann aber auch unter Ausnutzung eines elektrostatischen Effekts erfolgen, nämlich dadurch, dass das imprägnierte Papier 1 mit der isolierenden Unterschicht 2 durch die Anziehungswirkung bei unterschiedlicher elektrostatischer Aufladung der zu verbindenden Schichten verbunden ist. Der elektrostatische Effekt kann dabei auch dazu genutzt werden, um die Haftung des Papiers an der Unterschicht 2 während des für die Verbindung der beiden Schichten notwendigen Zeitraums bei Anwendung eines primären anderen Haftmittels, wie des genannten Bindemittels, nur zeitweilig zu verbessern.

In spezieller Ausführung kann zur Erzielung der Haftung auch die Anwendung eines bei der Herstellung der isolierenden Unterschicht 2 genutzten Bindemittels in Betracht gezogen werden, zum Beispiel eines Harzes im Fall einer Unterschicht 2 aus Kork, aus gepressten Teilchen oder aus ähnlichen Materialien. Das Papier 1 kann dann vorteilhafterweise schon während der Herstellung der Unterschicht 2 auf Letztere aufgebracht werden.

Die Unterschicht 2 und das Papier 1 können die Größe der Platte 4 haben, an der sie befestigt werden sollen. Sie können - wie oben bereits im Detail ausgeführt - auch fortlaufend miteinander von Rollen, Spulen oder Wickelvorrichtungen abgewunden und nach ihrem Transport und einer eventuellen Vorbehandlung wieder auf Rollen, Spulen oder Wickelvorrichtungen gelagert werden, bevor sie dann schließlich vor dem Arbeitsgang des Übereinanderlegens mit den anderen Schichten, die die genannte Platte 4 bilden sollen, zugeschnitten werden.

Wenn die isolierende Unterschicht 2 und das Papier 1 miteinander zu dem erfindungsgemäßen Ausgleichelement verbunden sind, wobei das Element - mit nach unten weisender Unterschicht 2 - die unterste Lage der erfindungsgemäßen Laminatbodenplatte 4 bildet, werden die anderen Schichten, die die Fußbodenbelag-Platte 4 bilden sollen, z. B. auf einem Hilfsmittel H, wie der in Fig. 6 dargestellten Lagerbasis, nacheinander - beginnend mit der unteren Oberfläche 5UU der Trägerplatte 5 - übereinander gelegt und zwar in folgender Reihenfolge: Kern auf Holzbasis, Dekorfolie 6, Overlay 7.

Das so geformte Ganze ist leicht greifbar, so dass es von dem Hilfsmittel H abgehoben und in unkomplizierter Weise in eine Pressvorrichtung gebracht werden kann, und zwar mit für das Ergreifen von Schichten geeigneten Mitteln. Diese Mittel können die Form von Klemmen oder eine andere Form haben, die geeignet ist, um verschiedene Schichten zum Übereinanderlegen zu ergreifen. So können insbesondere mit Unterdruck arbeitende Greifmittel, in der Art von Saugnäpfen eingesetzt werden, wie diese oben als Sauger 41, 44 beschrieben sind. Ein Durchbiegen oder Herunterhängen der Randbereiche tritt dabei nicht auf, weil das erfindungsgemäße Ausgleichelement eine für den Transport ausreichend stabile Lagerebene für die darüber angeordneten Schichten bildet.

Um die Gesamtheit der Schichten, die die Laminatbodenplatte 4 bilden sollen, zu verbinden, ist vorteilhafterweise nur ein einziger Pressarbeitsgang erforderlich. Der Arbeitsgang des Verklebens des Papiers 1 zwischen zwei Verfahrensstufen des Pressens ist nicht mehr notwendig.

Die vorliegende Erfindung bietet somit einerseits eine Alternative zur Komplexität einer kontinuierlichen Fertigungsvorrichtung, bei der insbesondere ein Wechsel der Dekorfolie 6 einen erhöhten Aufwand verursacht, indem der Ersatz einer entsprechenden Rolle auf der Spule und danach das Einfädeln eines neuen Bandes der Dekorfolie 6 durch die verschiedenen Pressrollen gesichert werden muß, bevor es möglich ist, den Produktionskreislauf wieder aufzunehmen.

Desgleichen bietet die vorliegende Erfindung - wie bereits erwähnt - andererseits eine Alternative zum doppelten Pressvorgang, der bei einer Fertigung unter Einsatz diskontinuierlichen Vorrichtungen notwendig ist.

Die vorliegende Erfindung ist nicht auf die beschriebenen Ausführungsbeispiele beschränkt, sondern umfaßt alle im Sinne der Ansprüche gleichwirkenden Ausgestaltungen. Varianten und Änderungen können sich dabei vor allem auf das Hinzufügen von Zwischenschichten oder zusätzlichen Schichten oberhalb, unterhalb oder zwischen den existierenden Schichten beziehen. Diese Varianten verlassen dabei nicht den Rahmen der Erfindung.

**Patentansprüche**

1. Verfahren zum Herstellen einer Laminatbodenplatte (4), insbesondere eines Fußboden-Laminats, bestehend aus einer Trägerplatte (5), die auf einer Oberseite einseitig beschichtet und an einer Unterseite mit einem Ausgleichelement, insbesondere einem Gegenzugimprägnat, versehen ist,
**dadurch gekennzeichnet, dass** zunächst zum Erhalt des Ausgleichelements eine Ausgleichfolie an einer isolierenden Unterschicht (2) befestigt wird, danach der auf diese Weise gebildete Verbund auf Hilfsmittel (H) gelegt wird, wobei die isolierende Unterschicht (2) die unterste Lage des Verbundes bildet, dann auf den Verbund nacheinander die Trägerplatte (5) als ein aus einem Holzwerkstoff bestehender Kern, eine Dekorschicht und ein Overlay (4) gelegt werden, wonach abschließend das auf diese Weise gebildete Ganze ergriffen, in eine Pressvorrichtung gelegt und verpresst wird.

2. Verfahren nach Anspruch 1,
**dadurch gekennzeichnet, dass** als Ausgleichfolie ein imprägniertes Papier (1), insbesondere ein imprägniertes Kraftpapier, verwendet wird.

3. Verfahren nach Anspruch 2,
**dadurch gekennzeichnet, dass** als Papier (1) ein Regeneratpapier auf der Basis von Edelzellstoffen oder ein Natron-Kraftpapier, vorzugsweise mit einer Rohpapiergrammatur von 70 bis 140 g/m², verwendet wird.

4.  Verfahren nach Anspruch 2 oder 3,
    **dadurch gekennzeichnet, dass** zur Imprägnierung des Papiers (1) ein Aminoplast-Harz bestehend aus Harnstoff und/oder Melaminharzen verwendet wird, wobei nach Imprägnierung und Trocknung ein Endgewicht von 170 bis 320 g/m² eingestellt wird.

5.  Verfahren nach einem der Ansprüche 2 bis 4,
    **dadurch gekennzeichnet, dass** das imprägnierte Papier (1) mit der isolierenden Unterschicht (2) mittels des Imprägniermittels des Papiers (1) verbunden wird.

6.  Verfahren nach einem der Ansprüche 2 bis 5,
    **dadurch gekennzeichnet, dass** das imprägnierte Papier (1) mit der isolierenden, insbesondere schalldämmenden, Unterschicht (2) mittels einer Klebebeschichtung (3) verbunden wird.

7.  Verfahren nach Anspruch 6,
    **dadurch gekennzeichnet, dass** zur Herstellung der Klebebeschichtung (3) ein Schmelzkleber, ein Haftkleber oder ein Dispersionskleber auf Copolymerbasis verwendet wird.

8.  Verfahren nach Anspruch 6 oder 7,
    **dadurch gekennzeichnet, dass** die Klebebeschichtung (3) durch mindestens zwei parallel verlaufende Klebespuren (25), vorzugsweise durch vier Klebespuren (25), gebildet wird.

9.  Verfahren nach einem der Ansprüche 1 bis 8,
    **dadurch gekennzeichnet, dass** die isolierende Unterschicht (2) aus Kork, aus gepressten Holzspänen geringer Dichte, aus Filz, aus unter Verwendung von Fasern, insbesondere synthetischer Fasern, gebildeten Verbünden, wie Geweben, Vliesen oder Folien, aus Schaumstoff, aus Gummigranulat oder aus Pappe hergestellt wird.

10. Verfahren nach Anspruch 9,
    **dadurch gekennzeichnet, dass** der Schaumstoff aus Polyurethan (PUR), vorzugsweise aus einem PUR-Recyclingschaumstoff, einem PUR-Verbundschaum und Bindemittel, hergestellt wird.

11. Verfahren nach Anspruch 9 oder 10,
    **dadurch gekennzeichnet, dass** die isolierende Unterschicht (2) aus einem PUR-Schaumstoff mit einer Dichte von 200 bis 400 kg/m³, vorzugsweise von 300 kg/m³, hergestellt wird.

12. Verfahren nach einem der Ansprüche 1 bis 11,
    **dadurch gekennzeichnet, dass** als isolierende Unterschicht (2) eine solche mit einer Dicke von 2 bis 4 mm, vorzugsweise von 3 mm, verwendet wird.

13. Verfahren nach einem der Ansprüche 1 bis 12,
    **dadurch gekennzeichnet, dass** die Dekorschicht durch ein imprägniertes, insbesondere mit Melaminharz imprägniertes, Dekorpapier (6) gebildet wird.

14. Verfahren nach einem der Ansprüche 1 bis 13,
    **dadurch gekennzeichnet, dass** als Trägerplatte (5) eine Span-, HDF-, MDF- oder Regeneratplatte verwendet wird.

15. Verfahren nach einem der Ansprüche 2 bis 14,
    **dadurch gekennzeichnet, dass** zum Erhalt des Ausgleichelements, insbesondere des Gegenzugimprägnates, das imprägnierte Papier (1) und die isolierende Unterschicht (2) jeweils bahnförmig (61, 17) von Rollen (60, 16) abgezogen werden und anschließend in übereinander liegender Anordnung aneinander gedrückt werden, wobei vor dem Andrücken auf die isolierende Unterschicht (2) auf ihrer der Bahn (61) des Papiers (1) zugekehrten Seite die Klebebeschichtung (3) aufgebracht wird.

16. Verfahren nach Anspruch 15,
    **dadurch gekennzeichnet, dass** die verklebte Bahn (61) des Papiers (1) und die aus der isolierenden Unterschicht (2) gebildete Bahn (17) bis zum Erreichen der gewünschten Länge des Ausgleichelements abgezogen, dann die Abzugsgeschwindigkeit gestoppt, das Ausgleichelement abgelängt und anschließend zum Stapeln weitertransportiert wird.

17. Verfahren nach einem der Ansprüche 6 bis 16,
**dadurch gekennzeichnet, dass** zum Erhalt des Ausgleichelements, insbesondere des Gegenzugimprägnates, auf ein vorgegebenes Maß in Papier-Zuschnitte (33) gebrachtes imprägniertes Papier (1) zu einem Papierstapel (32) gestapelt wird, von der Stapeloberseite jeweils ein Papier-Zuschnitt (33) abgehoben und auf eine den Abmessungen des Papier-Zuschnitts (33) angepasste Dämmstoffbahn (17) abgelegt wird, wobei vor dem Ablegen des Papier-Zuschnitts (33) die dem abzulegenden Papier (1) zugekehrte Seite der Dämmstoffbahn (17) mit der Klebebeschichtung (3) versehen wird.

18. Verfahren nach Anspruch 17,
**dadurch gekennzeichnet, dass** zum Bewegen der Papier-Zuschnitte (33) eine Transportvorrichtung (31, 31a) eingesetzt wird, die aus an einem gemeinsamen Transportrahmen (39) befestigten absenkbaren und anhebbaren Saugern (41) und Andrückleisten (42) besteht, wobei deren Anlageflächen für die Papier-Zuschnitte (33) in einer gemeinsamen Anlageebene liegen.

19. Verfahren nach Anspruch 17 oder 18,
**dadurch gekennzeichnet, dass** die Dämmstoffbahn (17) von einer Dämmstoffrolle (16) abgewickelt und über eine Auflagefläche (13) soweit gezogen wird, bis der auf der Auflagefläche (13) aufliegende Abschnitt der Dämmstoffbahn (17) mindestens die Länge des aufzulegenden Papier-Zuschnitts (33) aufweist, wobei die Dämmstoffbahn (17) beim Ablegen des Papier-Zuschnitts (33) in der abgewickelten Stellung gehalten wird.

20. Verfahren nach Anspruch 19,
**dadurch gekennzeichnet, dass** die Papier-Zuschnitte (33) aus einem oder zwei, vorzugsweise auf Paletten (51) plazierten, Papierstapeln (32) der Dämmstoffbahn (17) zugeführt werden, die in Bezug auf eine Abzugsrichtung (X) der Dämmstoffbahn (17) ein- oder beidseitig der Auflagefläche (13) angeordnet sind.

21. Verfahren nach Anspruch 19 oder 20,
**dadurch gekennzeichnet, dass** nach dem Ablegen des Papier-Zuschnitts (33) die fixierte Dämmstoffbahn (17) entsprechend der Länge des Papier-Zuschnitts (33) unter Bildung eines Zuschnitts (35) des Ausgleichelements, insbesondere des Gegenzugimprägnates, abgelängt wird.

22. Verfahren nach Anspruch 21,
**dadurch gekennzeichnet, dass** nach dem Ablängen der Dämmstoffbahn (17) der Zuschnitt (35) des Ausgleichelements, insbesondere des Gegenzugimprägnates, jeweils von der Auflagefläche (13) abgehoben und, insbesondere auf einem Hubtisch (50), zu einem Stapel (36) gestapelt wird, wobei das Papier (1) jeweils die Oberseite des Stapels (36) bildet.

23. Verfahren nach Anspruch 22,
**dadurch gekennzeichnet, dass** der Zuschnitt (35) des Ausgleichelements, insbesondere des Gegenzugimprägnates, auf einem, vorzugsweise auf einer Palette (51) plazierten, Stapel (36) gestapelt wird, der in Bezug auf eine Abzugsrichtung (X) der Dämmstoffbahn (17) seitlich oder hinter der Auflagefläche (13) angeordnet ist.

24. Verfahren nach einem der Ansprüche 18 bis 23,
**dadurch gekennzeichnet, dass** das Aufbringen der Klebeschicht (3) während des Abwickelns der Dämmstoffbahn (17) von der Dämmstoffrolle (16) erfolgt.

25. Verfahren nach einem der Ansprüche 1 bis 24,
**dadurch gekennzeichnet, dass** das Ausgleichelement, insbesondere das Gegenzugimprägnat, unter Einsatz von auf der Wirkung von Unterdruck basierenden Greifmitteln, wie Saugern (44), ergriffen, gehalten und bewegt wird.

26. Verfahren nach einem der Ansprüche 1 bis 25,
**dadurch gekennzeichnet, dass** die Verpressung unter einem Pressdruck von 20 bis 40 bar bei Presstemperaturen von 160 bis 200 °C sowie Presszeiten von 10 bis 30 s erfolgt.

27. Verwendung eines Ausgleichelementes, insbesondere eines Gegenzugimprägnates, welches aus einem imprägnierten Papier (1) gebildet ist, welches mit einer isolierenden Unterschicht (2) verbunden ist, zur Herstellung einer Laminatbodenplatte (4) in einem Verfahren nach einem der Ansprüche 1 bis 26.

28. Vorrichtung zur Herstellung eines Ausgleichelements, verwendet in einem Verfahren nach einem der Ansprüche 1 bis 26, umfassend eine Auflagevorrichtung (11), die eine Auflagefläche (13) für eine Dämmstoffbahn (17) aufweist und an der einendig eine Abrolleinrichtung (14) zum Abrollen der Dämmstoffbahn (17) von einer Dämmstoffrolle (16) angeordnet ist, weiterhin umfassend einen in Abzugsrichtung (X) hinter der Abrolleinrichtung (14) angeordneten Querschneider (19), eine in und gegen die Abzugsrichtung (X) entlang der Auflagevorrichtung (11) verschiebbare Greifeinrichtung (27) für die Dämmstoffbahn (17) sowie mindestens eine oberhalb der Auflagefläche (13) angeordnete Anhebe-, Ablage- und Transportvorrichtung (31, 31a, 34) zum Transport eines imprägnierten Papier-Zuschnitts (33) und/oder eines Ausgleichelement-Zuschnitts (35) quer zur Abzugsrichtung (X),

wobei in Abzugsrichtung (X) unmittelbar hinter dem Querschneider (19) oberhalb der Auflagefläche (13) eine Auftragsvorrichtung (22) zum Aufbringen einer Klebebeschichtung (3) auf die Dämmstoffbahn (17) angeordnet ist.

29. Vorrichtung nach Anspruch 28,
**dadurch gekennzeichnet, dass** die Auftragsvorrichtung (22) aus einem quer, insbesondere senkrecht zur Abzugsrichtung (X) verlaufenden Träger (23) besteht, an dem in Richtung auf die Auflagefläche (13) gerichtete Auftragsdüsen (24) befestigt sind.

30. Vorrichtung nach Anspruch 29,
**dadurch gekennzeichnet, dass** der Träger (23) an seinen Enden an Aktoren (25a) befestigt ist, mit denen der Träger (23) mit den Auftragsdüsen (24) zum Auftragen der Klebebeschichtung (3) auf die Dämmstoffbahn (17) in Richtung auf die Auflagefläche (13) abgesenkt und wider angehoben werden kann.

31. Vorrichtung nach Anspruch 29 oder 30,
**dadurch gekennzeichnet, dass** an dem Träger (23) mindestens zwei, vorzugsweise vier gleich beabstandete, Auftragdüsen (24) für die Klebebeschichtung (3) befestigt sind.

32. Vorrichtung nach einem der Ansprüche 28 bis 31,
**dadurch gekenntzeichnet,** dass die Anhebe-, Ablege- und Transportvorrichtung (31, 31a, 34) zwischen zwei quer, insbesondere senkrecht, zur Abzugsrichtung (X) und parallel zueinander angeordneten Portalträgern (37) an horizontalen Trägerabschnitten (38) verschiebbar geführt ist.

33. Vorrichtung nach einem der Ansprüche 28 bis 32,
**dadurch gekennzeichnet, dass** zwei Transportvorrichtungen (31, 31a, 34) vorhanden sind, von denen mindestens eine Transportvorrichtung (31, 31a), vorzugsweise beide Transportvorrichtungen (31, 31a), dem Transport der Papier-Zuschnitte (33) und gegebenenfalls die zweite Transportvorrichtung (34) dem Transport der Gegenzugimprägnat-Zuschnitte (35) zugeordnet ist.

34. Vorrichtung nach Anspruch 33,
**dadurch gekennzeichnet, dass** die Transportvorrichtung (31, 31a) für die Papier-Zuschnitte (33) aus an einem gemeinsamen Transportrahmen (39) befestigten absenkbaren und anhebbaren Saugern (41) und Andrückleisten (42) besteht, wobei deren Anlageflächen für die Papier-Zuschnitte (33) in einer gemeinsamen Anlageebene liegen.

35. Vorrichtung nach Anspruch 33 oder 34,
**dadurch gekennzeichnet, dass** die Transportvorrichtung (34) für die Gegenzugimprägnat-Zuschnitte (35) aus mehreren absenkbaren und anhebbaren Unterdruck-Saugern (44) besteht, deren Anlageflächen für die Gegenzugimprägnat-Zuschnitte (35) in einer gemeinsamen Anlageebene liegen.

36. Vorrichtung nach einem der Ansprüche 34 oder 35,
**dadurch gekennzeichnet, dass** die Sauger (41) derart angeordnet sind, und dass die Sauger (41) und die Andrückleisten (42) derart verteilt sind, dass ein glattflächiges Anheben und Absenken der Papier-Zuschnitte (33) erfolgt.

37. Vorrichtung nach einem der Ansprüche 28 bis 36,
**dadurch gekennzeichnet, dass** die Abrolleinrichtung (24) einen Antriebsmotor (26) zum Antrieb der Dämmstoffrolle (16) aufweist,

wobei die Abrollgeschwindigkeit des Antriebsmotors (26) und die Verschiebegeschwindigkeit der Greifeinrichtung (27) aufeinander abgestimmt sind.

38. Vorrichtung nach einem der Ansprüche 28 bis 37,

**dadurch gekennzeichnet, dass** die in und gegen die Abzugsrichtung (X) entlang der Auflagevorrichtung (11) verschiebbare Greifeinrichtung (27) an einer Führungsleiste (30) geführt ist.

39. Vorrichtung nach Anspruch 38,
**dadurch gekennzeichnet, dass** sich an die Führungsleiste (30) für die Greifeinrichtung (27) eine Führungsstange (30a) anschließt, die in Abzugsrichtung (X) über die Auflagefläche (13) hinausgeht.

40. Vorrichtung nach einem der Ansprüche 28 bis 39,
**dadurch gekennzeichnet, dass** in Abzugsrichtung (X) hinter der Auflagefläche (13) ein Hubtisch (50) zur Aufnahme und Stapelung der Gegenzugimprägnat-Zuschnitte (35) angeordnet ist.

41. Vorrichtung nach einem der Ansprüche 28 bis 40,
**dadurch gekennzeichnet, dass** zur An- und Abförderung der imprägnierten Papier-Zuschnitte (33) und/oder der Gegenzugimprägnat-Zuschnitte (35) Bereitstellungsplätze (32a, 33a, 52) und/oder mindestens ein Speicherplatz (53) vorgesehen sind, von oder zu denen die Stapel (32, 36) der imprägnierten Papier-Zuschnitte (33) und/oder der Gegenzugimprägnat-Zuschnitte (35) mit Hilfe von Querförderern (54) oder Längsförderern (55) transportiert werden.

**Claims**

1. Process for producing a laminated floorboard (4), in particular a flooring laminate, comprising a supporting board (5) which is single-sidedly coated on an upper side and is provided on an underside with a balance element, in particular an impregnated backing,
**characterised in that**, first of all, in order to obtain the balance element a balance sheet is fixed to an insulating underlay (2), after that, the composite formed in this way is laid on aid (H), the insulating underlay (2) forming the lowest layer of the composite, then the supporting board (5) as a core consisting of a wooden material, a decorative layer and an overlay (4) are laid successively on the composite, after which, finally, the whole formed in this way is gripped, placed in a pressing apparatus and pressed.

2. Process according to Claim 1,
**characterised in that** the balance sheet which is used is an impregnated paper (1), in particular an impregnated kraft paper.

3. Process according to Claim 2,
**characterised in that** the paper (1) which is used is a recycled paper based on alpha pulps or a soda kraft paper, preferably with a base paper grammage of 70 to 140 g/m$^2$.

4. Process according to Claim 2 or 3,
**characterised in that** an aminoplastic resin comprising urea and/or melamine resins is used to impregnate the paper (1), a final weight following impregnation and drying being 170 to 320 g/m$^2$.

5. Process according to one of Claims 2 to 4,
**characterised in that** the impregnated paper (1) is joined to the insulating underlay (2) by means of the impregnating agent of the paper (1).

6. Process according to one of Claims 2 to 5,
**characterised in that** the impregnated paper (1) is joined to the insulating, in particular sound-damping, underlay (2) by means of an adhesive coating (3).

7. Process according to Claim 6,
**characterised in that** a hot-melt adhesive, a contact adhesive or a dispersion adhesive based on a copolymer is used to produce the adhesive coating (3).

8. Process according to Claim 6 or 7,
**characterised in that** the adhesive coating (3) is formed by at least two adhesive tracks (25) running in parallel, preferably by four adhesive tracks (25).

9. Process according to one of Claims 1 to 8,

**characterised in that** the insulating underlay (2) is produced from cork, from pressed wood chips with a low density, from felt, from composites formed by using fibres, in particular synthetic fibres, such as woven fabrics, nonwoven fabrics or sheets, from foam, from granulated rubber or from paperboard.

10. Process according to Claim 9,
    **characterised in that** the foam is produced from polyurethane (PUR), preferably from a recycled PUR foam, composite PUR foam and binder.

11. Process according to Claim 9 or 10,
    **characterised in that** the insulating underlay (2) is produced from a PUR foam having a density of 200 to 400 kg/m$^3$, preferably of 300 kg/m$^3$.

12. Process according to one of Claims 1 to 11,
    **characterised in that** the insulating underlay (2) which is used is one with a thickness of 2 to 4 mm, preferably 3 mm.

13. Process according to one of Claims 1 to 12,
    **characterised in that** the decorative layer is formed by an impregnated, in particular melamine-resin-impregnated, decorative paper (6).

14. Process according to one of Claims 1 to 13,
    **characterised in that** the supporting board (5) which is used is a chip, HDF, MDF, or recycled board.

15. Process according to one of Claims 2 to 14,
    **characterised in that** in order to obtain the balance element, in particular the impregnated backing, the impregnated paper (1) and the insulating underlay (2) are in each case drawn off rolls (60, 16) in the form of webs (61, 17) and are subsequently pressed against each other in an arrangement lying one above the other, the adhesive coating (3) being applied to the insulating underlay (2) on its side facing the web (61) of the paper (1) before the pressing.

16. Process according to Claim 15,
    **characterised in that** the bonded web (61) of the paper (1) and the web (17) formed from the insulating underlay (2) are drawn off until the desired length of the balance element is reached, the drawing-off speed is then stopped, the balance element is cut to length and then transported onwards to be stacked.

17. Process according to one of Claims 6 to 16,
    **characterised in that** in order to obtain the balance element, in particular the impregnated backing, impregnated paper (1) brought to a predefined dimension in paper blanks (33) is stacked to form a paper stack (32), in each case a paper blank (33) is lifted off the stack upper side and is deposited on a web (17) of insulating material matched to the dimensions of the paper blank (33), the side of the web (17) of insulating material that faces the paper (1) to be deposited being provided with the adhesive coating (3) before the deposition of the paper blank (33).

18. Process according to Claim 17,
    **characterised in that** in order to move the paper blanks (33) use is made of a transport apparatus (31, 31a) which comprises suckers (41) and pressure strips (42) which are fixed to a common transport frame (39) and can be lifted and lowered, their contact surfaces for the paper blanks (33) lying in a common contact plane.

19. Process according to Claim 17 or 18,
    **characterised in that** the web (17) of insulating material is unwound from a roll (16) of insulating material and is drawn over a supporting surface (13) until the section of the web (17) of insulating material resting on the supporting surface (13) has at least the length of the paper blank (33) to be deposited, the web (17) of insulating material being held in the unwound position during the deposition of the paper blank (33).

20. Process according to Claim 19,
    **characterised in that** the paper blanks (33) are fed to the web (17) of insulating material from one or two paper stacks (32), preferably placed on pallets (51), the paper stacks being arranged on one or both sides of the supporting surface (13) in relation to a drawing-off direction (X) of the web (17) of insulating material.

21. Process according to Claim 19 or 20,
    **characterised in that**, following the deposition of the paper blank (33), the fixed web (17) of insulating material is cut to length in accordance with the length of the paper blank (33), forming a blank (35) of the balance element, in particular of the impregnated backing.

22. Process according to Claim 21,
**characterised in that**, after the web (17) of insulating material has been cut to length, the blank (35) of the balance element, in particular of the impregnated backing, is in each case lifted off the supporting surface (13) and stacked, in particular on a lifting table (50), to form a stack (36), the paper (1) in each case forming the upper side of the stack (36).

23. Process according to Claim 22,
**characterised in that** the blank (35) of the balance element, in particular of the impregnated backing, is stacked on a stack (36), preferably placed on a pallet (51), the stack being arranged beside or behind the supporting surface (13) in relation to a drawing-off direction (X) of the web (17) of insulating material.

24. Process according to one of Claims 18 to 23,
**characterised in that** the application of the adhesive layer (3) is carried out as the web (17) of insulating material is unwound from the roll (16) of insulating material.

25. Process according to one of Claims 1 to 24,
**characterised in that** the balance element, in particular the impregnated backing, is gripped, held and moved by using gripping means based on the action of a vacuum, such as suckers (44).

26. Process according to one of Claims 1 to 25,
**characterised in that** the pressing is carried out under a pressing pressure of 20 to 40 bar at pressing temperatures of 160 to 200°C and pressing times of 10 to 30 s.

27. Use of a balance element, in particular an impregnated backing, which is formed from an impregnated paper (1) joined to an insulating underlay (2), for the production of a laminated floorboard (4) in a process according to one of Claims 1 to 26.

28. Apparatus for the production of a balance element, used in a process according to one of Claims 1 to 26, comprising a supporting apparatus (11) which has a supporting surface (13) for a web (17) of insulating material and on which at one end there is arranged an unwinding device (14) for unwinding the web (17) of insulating material from a roll (16) of insulating material, further comprising a crosscutter (19) arranged after the unwinding device (14) in the drawing-off direction (X), a gripping device (27), which can be displaced in and counter to the drawing-off direction (X) along the supporting apparatus (11), for the web (17) of insulating material, and at least one lifting, depositing and transport apparatus (31, 31a, 34), arranged above the supporting surface (13), for the transport of an impregnated paper blank (33) and/or a balance element blank (35) transversely with respect to the drawing-off direction (X), an applicator (22) for applying an adhesive coating (3) to the web (17) of insulating material being arranged above the supporting surface (13) immediately after the crosscutter (19) in the drawing-off direction (X).

29. Apparatus according to Claim 28,
**characterised in that** the applicator (22) comprises a carrier (23) running transversely, in particular at right angles, to the drawing-off direction (X) and on which applicator nozzles (24) aimed in the direction of the supporting surface (13) are fixed.

30. Apparatus according to Claim 29,
**characterised in that**, at its ends, the carrier (23) is fixed to actuators (25a), with which the carrier (23) with the applicator nozzles (24) for applying the adhesive coating (3) to the web (17) of insulating material can be lowered in the direction of the supporting surface (13) and raised again.

31. Apparatus according to Claim 29 or 30,
**characterised in that** at least two, preferably four, equally spaced applicator nozzles (24) for the adhesive coating (3) are fixed on the carrier (23).

32. Apparatus according to one of Claims 28 to 31,
**characterised in that** the lifting, depositing and transport apparatus (31, 31a, 34) is guided such that it can be displaced between two portal carriers (37) arranged transversely, in particular at right angles, to the drawing-off direction (X) and parallel to each other, on horizontal carrier sections (38).

33. Apparatus according to one of Claims 28 to 32,
**characterised in that** there are two transport apparatuses (31, 31a, 34), of which at least one transport apparatus (31, 31a), preferably both transport apparatuses (31, 31a), are assigned to the transport of the paper blanks (33) and, if appropriate, the second transport apparatus (34) is assigned to the transport of the impregnated backing blanks (35).

34. Apparatus according to Claim 33,
**characterised in that** the transport apparatus (31, 31a) for the paper blanks (33) comprises suckers (41) and pressure strips (42) which are fixed to a common transport frame (39) and can be lifted and lowered, their contact surfaces for the paper blanks (33) lying in a common contact plane.

35. Apparatus according to Claim 33 or 34,
**characterised in that** the transport apparatus (34) for the impregnated backing blanks (35) comprises a plurality of vacuum suckers (44) which can be lowered and lifted and whose contact surfaces for the impregnated backing blanks (35) lie in a common contact plane.

36. Apparatus according to one of Claims 34 or 35,
**characterised in that** the suckers (41) are arranged in such a way and the suckers (41) and the pressure strips (42) are distributed in such a way that smooth lifting and lowering of the paper blanks (33) is carried out.

37. Apparatus according to one of Claims 28 to 36,
**characterised in that** the unwinding device (24) has a drive motor (26) for driving the roll (16) of insulating material, the unwinding speed of the drive motor (26) and the displacement speed of the gripping device (27) being coordinated with each other.

38. Apparatus according to one of Claims 28 to 37,
**characterised in that** the gripping device (27) that can be displaced along the supporting apparatus (11) in and counter to the drawing-off direction (X) is guided on a guide strip (30).

39. Apparatus according to Claim 38,
**characterised in that** the guide strip (30) for the gripping device (27) is adjoined by a guide rod (30a) which goes beyond the supporting surface (13) in the drawing-off direction (X).

40. Apparatus according to one of Claims 28 to 39,
**characterised in that** a lifting table (50) for accommodating and stacking the impregnated backing blanks (35) is arranged after the supporting surface (13) in the drawing-off direction (X).

41. Apparatus according to one of Claims 28 to 40,
**characterised in that**, in order to convey the impregnated paper blanks (33) and/or the impregnated backing blanks (35) in and out, standby spaces (32a, 33a, 52) and/or at least one storage space (53) are provided, from or to which the stacks (32, 36) of impregnated paper blanks (33) and/or the impregnated backing blanks (35) are transported with the aid of transverse conveyors (54) or longitudinal conveyors (55).

**Revendications**

1. Procédé pour la fabrication d'un parquet laminé (4), en particulier d'un laminé de sol, se composant d'un panneau porteur (5) qui est revêtu unilatéralement sur une surface supérieure et qui est muni sur sa face inférieure d'un élément d'équilibrage, particulier une contre-structure imprégnée,
**caractérisé en ce que** dans un premier temps, pour obtenir l'élément d'équilibrage, une feuille d'équilibrage est fixée sur une sous-couche isolante (2), ensuite le composite formé de cette manière est utilisé comme auxiliaire (H), la sous-couche isolante (2) formant la couche la plus inférieure du composite, puis une couche de décor et un overlay (4) sont posées l'un après l'autre sur le composite le panneau porteur (5) comme noyau composé de matériau dérivé du bois, et enfin, le tout formé de cette manière est saisi, placé dans une presse et comprimé.

2. Procédé selon la revendication 1,

**caractérisé en ce que** l'on emploie en tant que feuille d'équilibrage, un papier imprégné (1), particulièrement un papier kraft imprégné.

3. Procédé selon la revendication 2,
   **caractérisé en ce que** l'on emploie en tant que papier (1), un papier régénéré à base de cellulose noble ou un papier kraft à la soude, de préférence avec un grammage brut de 70 à 140 g/m$^2$.

4. Procédé selon la revendication 2 ou 3,
   **caractérisé en ce que** pour imprégner le papier (1), on emploie une résine amino composée d'urée et/ou de résines de mélamine, moyennant quoi après l'imprégnation et le séchage, un poids final de 170 à 320 g/m$^2$ est obtenu.

5. Procédé selon l'une des revendications 2 à 4,
   **caractérisé en ce que** le papier imprégné (1) est relié à la sous-couche isolante (2) au moyen de l'agent d'imprégnation du papier (1).

6. Procédé selon l'une des revendications 2 à 5,
   **caractérisé en ce que** le papier imprégné (1) est relié à la sous-couche isolante (2) isolant du bruit au moyen d'un revêtement adhésif (3).

7. Procédé selon la revendication 6,
   **caractérisé en ce que** pour fabriquer le revêtement adhésif (3), on emploie un adhésif à fusion, un adhésif autocollant ou un adhésif à dispersion à base de copolymère.

8. Procédé selon la revendication 6 ou 7,
   **caractérisé en ce que** le revêtement adhésif (3) et formé par au moins deux bandes d'adhésif (25) parallèles, de préférence par quatre bandes d'adhésif (25).

9. Procédé selon l'une des revendications 1 à 8,
   **caractérisé en ce que** la sous-couche isolante (2) est fabriquée en liège, en copeaux de bois comprimés de faible épaisseur, en feutre, en composites formées en employant des fibres, en particulier des fibres synthétiques comme des tissés, des non-tissés, des films, en mousse, en granulés de caoutchouc ou en carton.

10. Procédé selon la revendication 9,
    **caractérisé en ce que** la mousse est en polyuréthane (PUR), de préférence en mousse recyclée PUR, une mousse composite en PUR avec des liants.

11. Procédé selon la revendication 9 ou 10,
    **caractérisé en ce que** la sous-couche isolante (2) est fabriquée dans une mousse PUR avec une épaisseur de 200 à 400 kg/m$^3$, de préférence 300 kg/m$^3$.

12. Procédé selon l'une des revendications 1 à 11,
    **caractérisé en ce que** la sous-couche isolante (2) employée est celle ayant une épaisseur de 2 à 4 mm, de préférence de 3 mm.

13. Procédé selon l'une des revendications 1 à 12,
    **caractérisé en ce que** la couche de décor est formée par un papier de décor (6) imprégné, particulièrement imprégné de résine de mélamine.

14. Procédé selon l'une des revendications 1 à 13,
    **caractérisé en ce que** comme panneau porteur (5), on emploie un panneau de particules agglomérées, HDF, MDF ou régénéré.

15. Procédé selon l'une des revendications 2 à 14,
    **caractérisé en ce que** pour obtenir l'élément d'équilibrage, en particulier la contre-structure imprégnée, le papier imprégné (1) et la sous-couche isolante (2) sont tirés respectivement sous forme de bande (61, 17) depuis des rouleaux (60, 16) et appuyés l'un sur l'autre en un agencement où ils reposent l'un au-dessus de l'autre, avant la compression, le revêtement adhésif (3) est appliqué sur la sous-couche isolante (2) sur son côté tourné vers la bande (61) de papier (1).

**16.** Procédé selon la revendication 15,
**caractérisé en ce que** la bande (61) collée de papier (1) et la bande (17) formée par la sous-couche isolante (2) sont tirées jusqu'à ce que la longueur souhaitée de l'ensemble d'équilibrage soit atteinte, puis la vitesse de tirage est arrêtée, l'élément d'équilibrage est découpé en longueur puis transporté pour être empilé.

**17.** Procédé selon l'une des revendications 6 à 16,
**caractérisé en ce que** pour obtenir l'élément d'équilibrage, en particulier la contre-structure imprégnée, un papier (1) imprégné découpé en découpes de papier (33) de dimension prédéfinie est empilé en pile de papier (32), depuis le dessus de la pile, une découpe de papier (33) respective est tirée et posée sur une bande de matériau isolant (17) adaptée aux dimensions de la découpe de papier (33), moyennant quoi avant de poser la découpe de papier (33), le côté de la bande de matériau isolant (17) tourné vers le papier (1) à poser est muni du revêtement adhésif (3).

**18.** Procédé selon la revendication 17,
**caractérisé en ce que** pour déplacer les découpes de papier (33), on utilise un dispositif de transport (31, 31a) est employé qui se compose d'organes aspirants (41) et de barres d'appui (42) pouvant être soulevés et abaissés fixés sur un cadre de transport commun (39), moyennant quoi les faces d'appui pour les découpes de papier (33) reposent sur un plan d'appui commun.

**19.** Procédé selon la revendication 17 ou 18,
**caractérisé en ce que** la bande de matériau isolant (17) est déroulée par un rouleau de matériau isolant (16) et tirée sur une face d'appui (13) jusqu'à ce que la section de la bande de matériau isolant (17) reposant sur la face d'appui (13) présente au moins la longueur de la découpe de papier (33) à poser, la bande de matériau isolant (17) étant maintenue dans la position déroulée pendant la pose de la découpe de papier (33).

**20.** Procédé selon la revendication 19,
**caractérisé en ce que** les découpes de papier (33) sont dirigées à partir d'une ou de deux piles de papier (32) de la bande de matériau isolant (17) de préférence placées sur des palettes (51) qui sont disposées par rapport à une direction de déroulement (X) de la bande de matériau isolant (17) d'un ou des deux côtés de la face d'appui (13).

**21.** Procédé selon la revendication 19 ou 20,
**caractérisé en ce qu'**après la pose de la découpe de papier (33), la bande de matériau isolant (17) fixée est découpée en longueur conformément à la longueur de la découpe de papier (33) en formant une découpe (35) de l'élément d'équilibrage, en particulier de la contre-structure imprégnée.

**22.** Procédé selon la revendication 21,
**caractérisé en ce qu'**après la découpe de la bande de matériau isolant (17) dans la longueur, la découpe (35) de l'élément d'équilibrage, en particulier de la contre-structure imprégnée, est soulevée respectivement par la face d'appui (13) et est empilée en une pile (36), en particulier sur une table de levage (50), le papier (1) formant le dessus de la pile (36).

**23.** Procédé selon la revendication 22,
**caractérisé en ce que** la découpe (35) de l'élément d'équilibrage, en particulier de la contre-structure imprégnée, est empilée sur une pile (36) placée de préférence sur une palette (51) qui est disposée par rapport à direction de déroulement (X) de la bande de matériau isolant (17) latéralement ou derrière la face d'appui (13).

**24.** Procédé selon l'une des revendications 18 à 23,
**caractérisé en ce que** la pose du revêtement adhésif (3) s'effectue pendant que la bande de matériau isolant (17) est déroulée par le rouleau de matériau isolant (16).

**25.** Procédé selon l'une des revendications 1 à 24,
**caractérisé en ce que** l'élément d'équilibrage, en particulier la contre-structure imprégnée, est agrippé, maintenu et déplacé en employant des dispositifs de prise se basant sur l'effet de la sous-pression, comme des organes aspirants (44).

**26.** Procédé selon l'une des revendications 1 à 25,
**caractérisé en ce que** la compression s'effectue à une pression de compression de 20 à 40 bar avec des températures de compression de 160 à 200°C et des temps de compression de 10 à 30 s.

**27.** Emploi d'un l'élément d'équilibrage, en particulier d'une contre-structure imprégnée, formée d'un papier (1) imprégné, qui est reliée à une sous-couche isolante (2) pour fabriquer un parquet laminé (4) dans un procédé selon l'une des revendications 1 à 26.

**28.** Dispositif de fabrication d'un élément d'équilibrage, employé dans un procédé selon l'une des revendications 1 à 26, comprenant un dispositif d'appui (11) qui présente une face d'appui (13) pour une bande de matériau isolant (17) et sur une extrémité de laquelle est disposé un dispositif de déroulement (14) pour dérouler la bande de matériau isolant (17), comprenant en outre un couteau transversale (19) disposé dans la direction de déroulement (X) derrière le dispositif de déroulement (14), un dispositif de prise (27) mobile dans et contre la direction de déroulement (X) le long du dispositif d'appui (11) pour la bande de matériau isolant (17) ainsi qu'au moins un dispositif de levage, dépose et de transport (31, 31a, 34) disposé au-dessus de la face d'appui (13) pour transporter une découpe de papier (33) imprégné et/ou d'une découpe d'élément d'équilibrage (35) transversalement à la direction de déroulement (X), moyennant quoi dans la direction de déroulement (X) directement derrière le couteau transversal (19) au-dessus de la face d'appui (13), un dispositif d'application (12) est disposé pour appliquer un revêtement adhésif (3) sur la bande de matériau isolant (17).

**29.** Dispositif selon la revendication 28,
**caractérisé en ce que** le dispositif d'application (22) est composé d'un support (23) transversal en particulier perpendiculaire à la direction de déroulement (X), sur lequel des buses d'application (24) dirigées vers la face d'appui (13) sont fixées.

**30.** Dispositif selon la revendication 29,
**caractérisé en ce que** le support (23) est fixé par ses extrémités sur des actionneurs (25a) avec lesquels le support (23) peut être incliné puis à nouveau soulevé avec les buses d'application (24) pour appliquer le revêtement adhésif (3) sur la bande de matériau isolant (17) en direction de la face d'appui (13).

**31.** Dispositif selon la revendication 29 ou 30,
**caractérisé en ce que** sur le support (23) au moins deux, de préférence quatre buses d'application (24) pour le revêtement adhésif (3) sont fixées à distances égales.

**32.** Dispositif selon l'une des revendications 28 à 31,
**caractérisé en ce que** le dispositif de levage, dépose et de transport (31, 31a, 34) est amené de manière mobile entre deux supports de portique (37) transversaux, particulièrement perpendiculaires à la direction de déroulement (X) et parallèles entre eux, sur des sections de support horizontales (38).

**33.** Dispositif selon l'une des revendications 28 à 32,
**caractérisé en ce que** deux dispositifs de transport (31, 31a, 34) sont présents, dont au moins un dispositif de transport (31, 31a), de préférence les deux dispositifs de transport (31, 31a, 34), sont affectés au transport des découpes de papier (33) et le cas échéant, le deuxième dispositif de transport (34) est affecté au transport des découpes de contre-structure imprégnées (35).

**34.** Dispositif selon la revendication 33,
**caractérisé en ce que** le dispositif de transport (31, 31a) des découpes de papier (33) est composé d'organes d'aspiration (41) pouvant être abaissés et soulevés sur un cadre de transport commun (39), leurs faces d'appui pour les découpes de papier (33) reposant dans un plan d'appui commun.

**35.** Dispositif selon la revendication 33 ou 34,
**caractérisé en ce que** le dispositif de transport (34) des découpes de contre-structure imprégnées (35) est composé de plusieurs organes d'aspiration en sous-pression (41) pouvant être abaissés et soulevés, leurs faces d'appui pour les découpes de contre-structure (35) reposant dans un plan d'appui commun.

**36.** Dispositif selon l'une des revendications 34 ou 35,
**caractérisé en ce que** les organes d'aspiration (41) sont placés et que les organes d'aspiration (41) et les barres d'appui (42) sont répartis de sorte qu'un levage et un abaissement à surface lisse des découpes de papier (33) est réalisé.

**37.** Dispositif selon l'une des revendications 28 à 36,
**caractérisé en ce que** le dispositif de déroulement (24) présente un moteur d'entraînement (26) pour entraîner le rouleau de matériau isolant (16), la vitesse de déroulement du moteur d'entraînement (26) et la vitesse de déplacement du dispositif de prise (27) étant accordées entre elles.

38. Dispositif selon l'une des revendications 28 à 37,
**caractérisé en ce que** le dispositif de prise (27) mobile dans et contre la direction de déroulement (X) le long du dispositif d'appui (11) est dirigé sur une barre de guidage (30).

39. Dispositif selon la revendication 38,
**caractérisé en ce qu'**une tige de guidage (30a) se raccorde sur la barre de guidage (30) pour le dispositif de prise (27) qui fait saillie au-dessus de la face d'appui (13) dans la direction de déroulement (X).

40. Dispositif selon l'une des revendications 28 à 39,
**caractérisé en ce que** dans la direction de déroulement (X) derrière la face d'appui (13), une table de levage (50) est disposée pour recevoir et empiler les découpes de contre-structure imprégnées (35).

41. Dispositif selon l'une des revendications 28 à 40,
**caractérisé en ce que** pour amener et évacuer les découpes de papier (33) et/ou les découpes de contre-structure imprégnées (25), des emplacement de mise à disposition (32, 33a, 52) et/ou au moins un emplacement de stockage (53) sont prévus, desquels ou vers lesquels les piles (32, 36) des découpes de papier imprégné (33) et/ou des découpes de contre-structure imprégnées (25) sont transportées à l'aide de transporteurs transversaux (54) ou de transporteurs longitudinaux (55).

# Fig.1

# Fig.2

EP 1 627 977 B1

Fig. 3

24

Fig. 4

FIG.4a

Fig.5

# Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20207218 U1

- WO 02100638 A1